# EUROPEAN PATENT SPECIFICATION

(11) **EP 3 168 915 B1**
(45) Date of publication and mention of the grant of the patent: **07.08.2019**
(21) Application number: 16198477.8
(22) Date of filing: 11.11.2016
(51) Int. Cl.: H01M 10/052, H01M 10/0567, H01M 4/62

(54) **ADDITIVES FOR ELECTROCHEMICAL CELLS**
ADDITIVE FÜR ELEKTROCHEMISCHE ZELLEN
ADDITIFS POUR CELLULES ÉLECTROCHIMIQUES

(30) Priority: 13.11.2015 US 201562254821 P
(43) Date of publication of application: 17.05.2017
(73) Proprietor: BASF SE, 67056 Ludwigshafen am Rhein (DE); Sion Power Corporation, Tucson, AZ 85756 (US)
(72) Inventor: Weiss, Thomas, 68549 Ilvesheim (DE); Mikhaylik, Yuriy V., Tucson, AZ 85748 (US); Kovalev, Igor, Vail, AZ Arizona 85641 (US)
(74) Representative: Eisenführ Speiser

(56) References cited:
- WO-A1-02/101119
- CN-A- 103 427 068
- JP-A- 2005 310 482
- US-A- 5 695 887
- US-A1- 2015 290 834
- VLADIMIR E. VIGDERGAUZ ET AL: "The wettability of electrodes made of natural metal sulfides", JOURNAL OF SOLID STATE ELECTROCHEMISTRY, vol. 2, no. 1, 14 January 1998 (1998-01-14), pages 50-57, XP055343255, DE ISSN: 1432-8488, DOI: 10.1007/s100080050063
- MEILIN LIU ET AL: "ELECTRODE KINETICS OF ORGANODISULFIDE CATHODES FOR STORAGE BATTERIES", JOURNAL OF THE ELECTROCHEMICAL SOCIETY, ELECTROCHEMICAL SOCIETY, INC, US, vol. 137, no. 3, 1 March 1990 (1990-03-01) , pages 750-759, XP000237609, ISSN: 0013-4651

## Description

The present application relates to electrochemical cells comprising additives and/or additive precursors and to methods comprising introducing into an electrochemical cell or a component of an electrochemical cell an additive and/or an additive precursor as well as to the use of additives and/or additive precursors.

There has been considerable interest in recent years in developing high energy density batteries with lithium-containing anodes. In such cells, cathode active material reduction and oxidation electrochemical processes generally involve lithium ions. In particular, cathode active materials may electrochemically intercalate lithium ions and/or produce soluble and insoluble lithium compounds during the charge-discharge process. Rechargeable batteries with such metallic lithium electrodes generally exhibit limited cycle lifetimes. Accordingly, articles and methods for increasing the cycle lifetime and/or other improvements would be beneficial.

US 2015/0290834 A1 discloses a process for the manufacture of a mesoporous product comprising the following successive steps:
a) preparation of a slip comprising a solvent, an additive, more than 4%, as percentage by volume based on the slip, of a powder formed of ceramic particles,
b) oriented freezing of the slip, so as to form a block comprising ice crystals separated by walls,
c) removal of the ice crystals from said frozen slip block, optionally removed from the mold, so as to obtain a porous preform,
d) removal of the additive, so as to obtain a preformed mesoporous product,
the additive and the amount of additive being chosen so that the additive is present in a mesopore-forming micellar phase in said walls, more than 25% by volume of said ceramic particles exhibiting a size less than twice the size of the micelles of said mesopore-forming micellar phase.

CN 103 427 068 A discloses a positive electrode material comprising a current collector, a positive electrode active substance coated onto the current collector, a conductive agent and a binding agent, wherein said current collector is aluminum foil, said conductive agent is acetylene black, and said binding agent is polyvinylidene fluoride. Said positive electrode material is further characterized in that said positive electrode active substance is a sulfur source TMTD-t-T decomposed from TMTD (tetramethylthiuram disulfide) at different time t and different temperatures T, wherein t is equal to 12 or 24 h, T is equal to 120, 140, 160 or 180°C.

US 5,695,887 A discloses a rechargeable lithiated intercalation cell having reduced self-discharge, comprising a negative electrode, a nonaqueous electrolyte, and a positive electrode, wherein the positive electrode comprises a lithiated intercalation electrode, said lithiated intercalation electrode comprising a lithiated intercalation compound, said lithiated intercalation compound comprising an aggregate of particulates, the surfaces of said particulates having a passivating layer formed by chelating reaction with a chelating agent.

According to a first aspect of the present invention (as defined in the claims), there is provided an electrochemical cell, comprising:
a first electrode comprising a first active electrode species wherein the first active electrode species comprises lithium;
a second electrode comprising a second active electrode species;
an electrolyte positioned between the first electrode and the second electrode;
an additive having a structure as in Formula (I) and/or an additive precursor having a structure as in Formula (II): 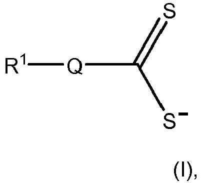 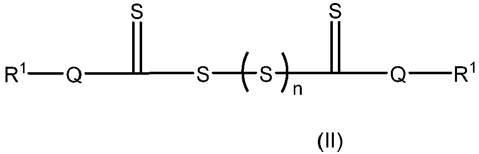 wherein:
   each R¹ and R² are the same or different, optionally connected, and are independently selected from the group consisting of substituted and unsubstituted, branched and unbranched aliphatic; substituted and unsubstituted cyclic; substituted and unsubstituted, branched and unbranched acyclic; substituted or unsubstituted, branched and unbranched heteroaliphatic; substituted and unsubstituted, branched and unbranched acyl; substituted and unsubstituted aryl; and substituted and unsubstituted heteroaryl; and n is 1; and
   (a) each Q is independently selected from the group consisting of O, S;
      or
   (b) each Q is independently selected from the group consisting of O, S, NR²; and
      the additive and any additive precursor is present in the electrochemical cell in a total amount of less than or equal to 4 wt% versus the total electrolyte weight, or the additive and any additive precursor is present in the electrochemical cell in a total amount of less than or equal to 2 wt% versus the weight of each of the first and second electrodes;
      or
   (c) each Q is selected from the group consisting of O, S, NR²; and
      the additive and any additive precursor is/are different from the first and second active electrode species
   wherein the additive and/or additive precursor is present in the electrolyte.

Preferably, in the first aspect of the present invention said additive precursor has a structure as in formula (II') 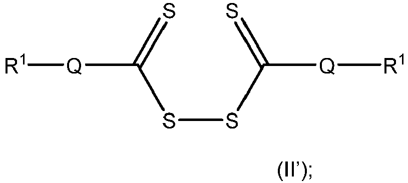 wherein:
each R¹ and R² are the same or different, optionally connected, and are independently selected from the group consisting of substituted and unsubstituted, branched and unbranched aliphatic; substituted and unsubstituted cyclic; substituted and unsubstituted, branched and unbranched acyclic; substituted or unsubstituted, branched and unbranched heteroaliphatic; substituted and unsubstituted, branched and unbranched acyl; substituted and unsubstituted aryl; and substituted and unsubstituted heteroaryl; and
(a) each Q is independently selected from the group consisting of O, S;
   or
(b) each Q is independently selected from the group consisting of O, S, NR²; and
   the additive and any additive precursor is present in the electrochemical cell in a total amount of less than or equal to 4 wt% versus the total electrolyte weight, or the additive and any additive precursor is present in the electrochemical cell in a total amount of less than or equal to 2 wt% versus the weight of each of the first and second electrodes; or
(c) each Q is selected from the group consisting of O, S, NR²; and
   the additive and any additive precursor is/are different from the first and second active electrode species.

In some cases, an electrochemical cell comprises a first electrode comprising a first active electrode species comprising lithium, a second electrode comprising a second active electrode species, an electrolyte positioned between the first electrode and the second electrode, lithium bis-oxalatoborate, and an additive having a structure as in Formula (I): 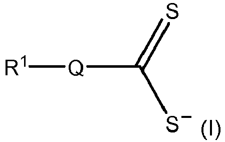 wherein each occurrence of Q is independently selected from the group consisting of, O, S, NR², each R¹ and R² are the same or different, optionally connected, and are independently selected from the group consisting of substituted and unsubstituted, branched and unbranched aliphatic, substituted and unsubstituted cyclic, substituted and unsubstituted, branched and unbranched acyclic, substituted and unsubstituted, branched and unbranched heteroaliphatic, substituted and unsubstituted, branched and unbranched acyl, substituted and unsubstituted aryl, and substituted and unsubstituted heteroaryl, and wherein the additive and any additive precursor is/are different from the first and second active electrode species.

In some cases, an electrochemical cell comprises a first electrode comprising a first active electrode species comprising lithium, a second electrode comprising a second active electrode species, an electrolyte positioned between the first electrode and the second electrode, lithium bis-oxalatoborate and one or more selected from the group consisting of an ethyl xanthate salt, a diethiocarbamate salt, and an isopropyl xanthate salt.

In some cases, an electrochemical cell comprises a first electrode comprising a first active electrode species comprising lithium, a second electrode comprising a second active electrode species, an electrolyte positioned between the first electrode and the second electrode, lithium bis-oxalatoborate, and an additive having a structure as in Formula (I): 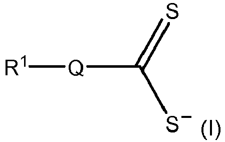 wherein each occurrence of Q is independently selected from the group consisting of O, S, NR², each R¹ and R² are the same or different, optionally connected, and are independently selected from the group consisting of substituted and unsubstituted, branched and unbranched aliphatic, substituted and unsubstituted cyclic, substituted and unsubstituted, branched and unbranched acyclic, substituted and unsubstituted, branched and unbranched heteroaliphatic, substituted and unsubstituted, branched and unbranched acyl, substituted and unsubstituted aryl, and substituted and unsubstituted heteroaryl, and wherein the additive and any additive precursor is/are different from the first and second active electrode species. The second electrode is an intercalation electrode (e.g., a lithium intercalation electrode), optionally comprising one or more selected from the group consisting of LixCoO₂, LixNiO₂, LixMnO₂, LixMn₂O₄, LixFePO₄, LixCoPO₄, LixMnPO₄, and LiₓNiPO₄, where (0 < x ≤ 1), and LiNiₓMn_{y}Co_{z}O₂ where (x + y + z =1).

According to a second aspect of the present invention as defined in the claims, there is provided a method, comprising:
introducing into an electrochemical cell or a component of an electrochemical cell an additive having a structure as in Formula (I) and/or an additive precursor having a structure as in Formula (II): 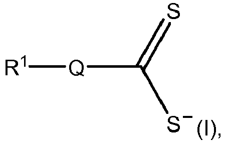 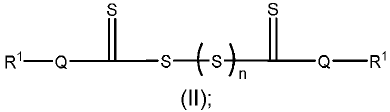 wherein:
each occurrence of Q is independently selected from the group consisting of O, S, NR²;
n is 1; and
each R¹ and R² are the same or different, optionally connected, and are independently selected from the group consisting of substituted and unsubstituted, branched and unbranched aliphatic; substituted and unsubstituted cyclic; substituted and unsubstituted, branched and unbranched acyclic; substituted and unsubstituted, branched and unbranched heteroaliphatic; substituted and unsubstituted, branched and unbranched acyl; substituted and unsubstituted aryl; and substituted and unsubstituted heteroaryl,
wherein, when Q is NR², said additive and/ or said additive precursor is introduced into an electrochemical cell comprising an electrode comprising active electrode species that is/are different from the additive and any additive precursor,
wherein the electrochemical cell comprises a first electrode comprising a first active electrode species and a second electrode comprising a second active electrode species, wherein the first active electrode species comprises lithium;
wherein introducing comprises adding to an electrolyte the additive having a structure as in Formula (I) and/or the additive precursor having a structure as in Formula (II).

A third aspect of the present invention (as defined in the claims) relates to the use of an additive for controlling the cycle life of an electrochemical cell comprising:
a first electrode comprising a first active electrode species; wherein the first active electrode species comprises lithium;
a second electrode comprising a second active electrode species;
an electrolyte positioned between the first electrode and the second electrode;
said additive having a structure as in Formula (I) and/or an additive precursor having a structure as in Formula (II): 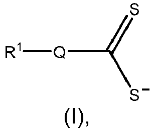 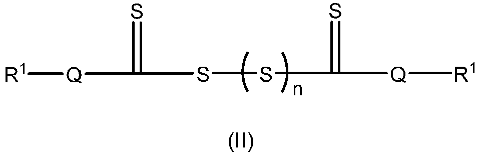 wherein:
   each R¹ and R² are the same or different, optionally connected, and are independently selected from the group consisting of substituted and unsubstituted, branched and unbranched aliphatic; substituted and unsubstituted cyclic; substituted and unsubstituted, branched and unbranched acyclic; substituted or unsubstituted, branched and unbranched heteroaliphatic; substituted and unsubstituted, branched and unbranched acyl; substituted and unsubstituted aryl; and substituted and unsubstituted heteroaryl; and n is 1; and
   (a) each Q is independently selected from the group consisting of O, S;
      or
   (b) each Q is independently selected from the group consisting of O, S, NR²; and
      the additive and any additive precursor is present in the electrochemical cell in a total amount of less than or equal to 4 wt% versus the total electrolyte weight, or the additive and any additive precursor is present in the electrochemical cell in a total amount of less than or equal to 2 wt% versus the weight of each of the first and second electrodes;
      or
   (c) each Q is selected from the group consisting of O, S, NR²; and
      the additive and any additive precursor is/are different from the first and second active electrode species
   wherein the additive and/or additive precursor is present in the electrolyte.

Preferably, in the third aspect of the present invention said additive precursor has a structure as in formula (II') 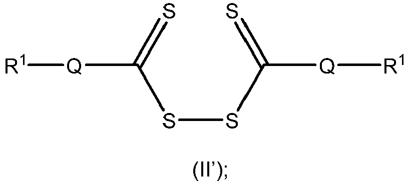 wherein:
each R¹ and R² are the same or different, optionally connected, and are independently selected from the group consisting of substituted and unsubstituted, branched and unbranched aliphatic; substituted and unsubstituted cyclic; substituted and unsubstituted, branched and unbranched acyclic; substituted or unsubstituted, branched and unbranched heteroaliphatic; substituted and unsubstituted, branched and unbranched acyl; substituted and unsubstituted aryl; and substituted and unsubstituted heteroaryl; and
(a) each Q is independently selected from the group consisting of O, S;
   or
(b) each Q is independently selected from the group consisting of O, S, NR²; and
   the additive and any additive precursor is present in the electrochemical cell in a total amount of less than or equal to 4 wt% versus the total electrolyte weight, or the additive and any additive precursor is present in the electrochemical cell in a total amount of less than or equal to 2 wt% versus the weight of each of the first and second electrodes; or
(c) each Q is selected from the group consisting of O, S, NR²; and
   the additive and any additive precursor is/are different from the first and second active electrode species.

In preferred cases, use of an additive or additive precursor as described above results in an improvement of the cycle life of the electrochemical cell.

In the methods described above and herein, an introducing step comprises adding to an electrolyte the additive having a structure as in Formula (I) and/or the additive precursor having a structure as in Formula (II).

In certain preferred electrochemical cells and/or methods described above and herein, the electrochemical cell comprises a first electrode comprising a first active electrode species comprising lithium and a second electrode comprising a second active electrode species, wherein the first and second active electrode species are different from the additive and the additive precursor.

In certain preferred electrochemical cells and/or methods described above and herein, the additive and/or additive precursor is polyanionic and/or a salt.

In certain preferred electrochemical cells and/or methods described above and herein, the additive comprises a cation selected from the group consisting of Li⁺, Na⁺, K⁺, Cs⁺, Rb⁺, Ca²⁺, Mg²⁺, substituted and unsubstituted ammonium, guanidinium and imidazolium.

In certain preferred electrochemical cells and/or methods described above and herein, the additive and/or additive precursor comprises a xanthate group.

In certain preferred electrochemical cells and/or methods described above and herein, each R¹ is C₂H₅ and/or each R² is C₂H₅.

In certain preferred electrochemical cells and/or methods described above and herein, at least one Q is oxygen or sulfur.

In electrochemical cells and/or methods described above and herein, n=1.

In certain preferred electrochemical cells and/or methods described above and herein, at least a portion of the additive and/or additive precursor is in solid form.

In certain preferred electrochemical cells and/or methods described above and herein, at least a portion of the additive and/or additive precursor is dissolved in the electrolyte.

In certain preferred electrochemical cells and/or methods described above and herein, the additive and/or additive precursor is at least partially soluble in the electrolyte.

In certain preferred electrochemical cells and/or methods described above and herein, the additive and/or additive precursor is present in the electrolyte.

In certain preferred electrochemical cells and/or methods described above and herein, the additive and any additive precursor is present in the electrolyte in a total amount ranging between 0.5 wt% and 20 wt% versus the total weight of the electrolyte and additive and/or additive precursor.

In certain preferred electrochemical cells and/or methods described above and herein, the additive and any additive precursor is present in the electrolyte in a total amount ranging between 0.5 wt% and 10 wt% versus the weight of each of the first and second electrodes.

In certain preferred electrochemical cells and/or methods described above and herein, the electrolyte comprises a nitrate selected from the group consisting of LiNO₃, guanidine nitrate, and pyridine nitrate.

In certain preferred electrochemical cells and/or methods described above and herein, the electrolyte comprises one or more of a carbonate, a hexafluorophosphate, 1,3-dioxolane, 1,2-dimethoxyethane, a sulfonimide, sulfones, sulfolanes, esters of carbonic acid, and/or a nitrate containing compound.

In certain preferred electrochemical cells and/or methods described above and herein, the second active electrode species comprises sulfur.

In certain preferred electrochemical cells and/or methods described above and herein, the second electrode is an intercalated electrode.

Other advantages and novel features of the present invention will become apparent from the following detailed description when considered in conjunction with the accompanying figures. In cases where the present specification and a cited document include conflicting and/or inconsistent disclosure, the present specification shall control. If two or more cited documents include conflicting and/or inconsistent disclosure with respect to each other, then the document having the later effective date shall control.

An electrochemical cell according to the present invention generally includes a first electrode, a second electrode, an electrolyte and an additive having a structure as in Formula (I) and/or an additive precursor having a structure as in Formula (II) and optionally a separator. At least one of the first electrode, second electrode, electrolyte, and/or optional separator may include such additive and/or additive precursor incorporated therein. Advantageously, an electrochemical cell comprising one or more additives and/or additive precursors described herein may offer one or more advantages over electrochemical cells that do not include such an additive or additive precursor, including, but not limited to, increasing cycle lifetimes, providing improved lithium morphologies, increasing the compaction of lithium, and/or reducing the depletion of lithium during charge/discharge of an electrochemical cell.

The disclosed additives and additive precursors may be incorporated into various electrochemical cells. The electrochemical cell may be a lithium-based electrochemical cell, such as a lithium-sulfur electrochemical cell, a lithium-ion electrochemical cell, a lithium metal-lithium-ion electrochemical cell, an intercalated lithium metal oxide electrochemical cell, an intercalated lithium metal phosphate electrochemical cell.

The additives and/or additive precursors may be included in any suitable form in an electrochemical cell, as described in more detail below. The additives and/or additive precursors may be added, as a solid (e.g., a salt, as particles) incorporated within the cathode, the anode, and/or the optional separator, for instance in the form of a solid layer on the cathode, the anode, and/or the optional separator. In other cases the solid additive and/or additive precursor may be soluble or partially soluble in the electrolyte. In some cases, upon cycling of the electrochemical cell, the additive or additive precursor may remain in the component to which the additive or additive precursor was originally included (e.g., upon fabrication of electrochemical cell). In other cases, at least a portion of the additive or additive precursor may leach out of the component to which the additive or additive precursor was originally included, and migrate into the electrolyte. In other cases the additive or additive precursor may be included in the electrolyte (e.g., in soluble or partially-soluble form) upon fabrication of the electrochemical cell. Combination of such configurations is also possible.

The additive has a structure as in Formula (I): 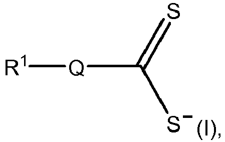 wherein Q is selected from the group consisting of O, S, NR², and each R¹ and R² are the same or different, optionally connected, and are independently selected from the group consisting of substituted and unsubstituted, branched and unbranched aliphatic; substituted and unsubstituted cyclic; substituted and unsubstituted, branched and unbranched acyclic; substituted and unsubstituted, branched and unbranched heteroaliphatic; substituted and unsubstituted, branched and unbranched acyl; substituted and unsubstituted aryl; and substituted and unsubstituted heteroaryl.

In certain additives, Q is independently selected from the group consisting of O, S, and each R¹ and R² are the same or different, optionally connected, and are independently selected from the group consisting of substituted and unsubstituted, branched and unbranched aliphatic; substituted and unsubstituted cyclic; substituted and unsubstituted, branched and unbranched acyclic; substituted and unsubstituted, branched and unbranched heteroaliphatic; substituted and unsubstituted, branched and unbranched acyl; substituted and unsubstituted aryl; and substituted and unsubstituted heteroaryl. In certain additives, Q is independently selected from the group consisting of O, S, NR².

In particular additives, Q is sulfur. In other particular additives, Q is NR². In preferred cases the additive is a xanthate salt comprising a structure as in Formula (I) such that Q is oxygen. In further preferred cases, the additive is a dithiocarbamate salt comprising a structure in Formula (I) such that Q is nitrogen.

An exemplary additive comprises a structure as in Formula (I) wherein Q is oxygen and R¹ is C₂H₅. Another exemplary additive comprises a structure as in Formula (I) wherein Q is sulfur and R¹ is C₂H₅. Yet another exemplary additive comprises a structure as in Formula (I) wherein Q is NR², and R¹ and R² are each C₂H₅.

Certain additives comprising a structure as in Formula (I) further comprise a cation. Preferably, the cation is selected from the group consisting of Li⁺, Na⁺, K⁺, Cs⁺, Rb⁺, Ca²⁺, Mg²⁺, substituted and unsubstituted ammonium, and organic cations such as guanidinium and imidazolium. In some cases, the additive may be polyanionic.

An exemplary additive is potassium ethyl xanthate having a structure as in:

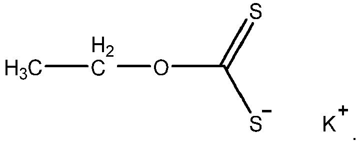

Another exemplary additive is lithium diethyl dithiocarbamate having a structure as in:

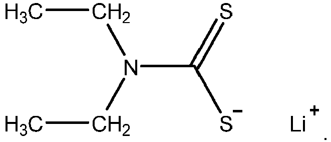

Yet another exemplary additive is potassium isopropyl xanthate having a structure as in:

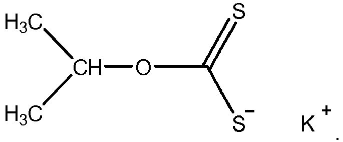

Those skilled in the art would understand that additional structures and cations are also possible based upon the teachings of this specification.

As described herein, in some cases, the additive is derived from an additive precursor. In certain cases, the electrochemical cell comprises the additive precursor such that, for example, the additive precursor oxidizes into an additive as described herein after being incorporated into the electrochemical cell. For instance, the additive may form from the additive precursor during charge/discharge of the electrochemical cell. For example, the additive precursor may be added to the electrochemical cell (e.g., in the electrolyte, as part of a first or second electrode, as part of a layer in the cell) where at least a portion of the additive precursor forms an additive as described herein.

The additive precursor has a structure as in Formula (II): 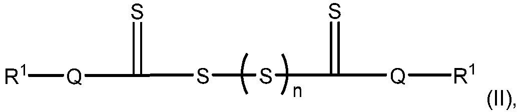 wherein each Q is independently selected from the group consisting of O, S, NR², and each R¹ and R² are the same or different, optionally connected, and are independently selected from the group consisting of substituted and unsubstituted, branched and unbranched aliphatic; substituted and unsubstituted cyclic; substituted and unsubstituted, branched and unbranched acyclic; substituted and unsubstituted, branched and unbranched heteroaliphatic; substituted and unsubstituted, branched and unbranched acyl; substituted and unsubstituted aryl; and substituted and unsubstituted heteroaryl.

In certain additive precursors each occurrence of Q is independently selected from the group consisting of O, S, NR². Each Q may be the same or different and selected from the group consisting of oxygen, sulfur, and NR².

In particular additive precursors, each Q is the same and is sulfur. In other particular additive precursors, each Q is the same and is NR². In yet other particular additive precursors, each Q is the same and is oxygen.

An exemplary additive precursor comprises a structure as in Formula (II) wherein each Q is the same and oxygen and R¹ is C₂H₅. Another exemplary additive precursor comprises a structure as in Formula (II) wherein each Q is the same and is sulfur and R¹ is C₂H₅. Yet another exemplary additive precursor comprises a structure as in Formula (II) wherein each Q is the same and is NR², wherein R¹ and R² are each C₂H₅.

In additive precursors according to the invention, n is 1 (such that the additive precursor comprises a disulfide bridge).

In certain cases, the additive and any additive precursor is/are different from the first and second active electrode species (e.g., when two electrodes including different active electrode species are present). For example, the additive having a structure as in Formula (I) and/or the additive precursor having a structure as in Formula (II) is added to an electrochemical cell having a first electrode (including a first active electrode species comprising lithium metal) and a second electrode (e.g., including a second active electrode species comprising sulfur). In other cases, other electroactive species that are not the same species as (or derivatives of) the additive and/or additive precursor can be used. Active electrode species (e.g., anode active electrode species, cathode active electrode species) are described in more detail, below. The addition of additives and additive precursors is also described in more detail, below.

The additive and additive precursor may be present in an electrochemical cell in any suitable amount. The additive and additive precursor may be present in the electrochemical cell in an amount less than or equal to 20 wt% versus the total weight of the electrolyte and additive and/or additive precursor. For example, the total weight of the additive and additive precursor present in the electrochemical cell is less than or equal to 20 wt%, less than or equal to 18 wt%, less than or equal to 15 wt%, less than or equal to 12 wt%, less than or equal to 10 wt%, less than or equal to 8 wt%, less than or equal to 6 wt%, less than or equal to 5 wt%, less than or equal to 4 wt%, less than or equal to 3 wt%, less than or equal to 2 wt%, or less than or equal to 1 wt% versus the total weight of the electrolyte and additive and/or additive precursor. For example, the total weight of the additive and additive precursor present in the electrochemical cell is greater than 0.5 wt%, greater than 1 wt%, greater than 2 wt%, less than or equal to 3 wt%, greater than 4 wt%, greater than 6 wt%, greater than 8 wt%, greater than 10 wt%, or greater than 15 wt% versus the total weight of the electrolyte and additive and/or additive precursor.

Combinations of the above-referenced ranges are also possible (e.g., between 0.5 wt% and 20 wt%, between 1 wt% and 8 wt%, between 4 wt% and 10 wt%, between 6 wt% and 15 wt%, between 8 wt% and 20 wt%). Other ranges are also possible. In some cases, the wt% of additive and additive precursor is measured prior to first use or first discharge of the electrochemical cell. Methods for determining the weight percentage of the additive and additive precursor within the electrolyte are known within the art and may include weighing the additive and additive precursor and the electrolyte before adding the additive and/or additive precursor to the electrolyte. In other cases, the wt% is measured at a point in time during the cycle life of the cell. Herein, the cycling of an electrochemical cell may be stopped and the wt% of the electrolyte may be determined using, for example, gas chromatography-mass spectrometry. Other methods such as NMR, inductively coupled plasma mass spectrometry (ICP-MS), and elemental analysis can also be used.

The amount of additive and additive precursor may be measured against the weight of one or more of the first or second electrodes. The additive and additive precursor may be present in the electrochemical cell in an amount less than or equal to 10 wt% versus the weight of each of the first and second electrodes. For example, the total weight of the additive and additive precursor present in the electrochemical cell is less than or equal to 10 wt%, less than or equal to 8 wt%, less than or equal to 6 wt%, less than or equal to 4 wt%, less than or equal to 2 wt%, or less than or equal to 1 wt% versus the weight of each of the first and second electrodes. For example, the total weight of the additive and additive precursor present in the electrochemical cell is greater than 0.5 wt%, greater than 1 wt%, greater than 2 wt%, greater than 4 wt%, greater than 6 wt%, or greater than 8 wt% versus the weight of each of the first and second electrodes. Combinations of the above-referenced ranges are also possible (e.g., between 0.5 wt% and 10 wt%, between 1 wt% and 4 wt%, between 2 wt% and 6 wt%, between 4 wt% and 8 wt%, between 6 wt% and 10 wt%). Other ranges are also possible. In some cases, the wt% of additive and additive precursor is measured prior to first use or first discharge of the electrochemical cell. Methods for determining the weight percentage of the additive and additive precursor within a layer (e.g., an electrode, a separator) of the electrochemical cell are known within the art and include weighing the additive and additive precursor and the layer before adding the additive and/or additive precursor to the layer. In other cases, the wt% is measured at any point in time during the cycle life of the cell. Herein, the cycling of an electrochemical cell may be stopped and the wt% of the electrolyte may be determined using, for example, gas chromatography-mass spectrometry. Other methods such as NMR, inductively coupled plasma mass spectrometry (ICP-MS), and elemental analysis can also be used.

While many examples described herein relate to lithium-sulfur and/or lithium-ion electrochemical cells, it is to be understood that the additives and/or additive precursors described herein may be used in any suitable electrochemical cell, such as analogous alkali metal/sulfur electrochemical cells (including alkali metal anodes).

As noted above and as described in more detail herein, the additive and/or additive precursor layer may be incorporated into an electrochemical cell as a layer adjacent an electrode. In some cases, the electrochemical cell may be fabricated by providing an electrode, an additive layer comprising the additive and/or additive precursor, and an electrolyte layer.

The additive precursor may be added (e.g., as a solid, as a film, dissolved in solution) to an electrolyte, an electrode, a separator, and/or any additional layers of an electrochemical cell in an amount described above, e.g., prior to formation, prior to first use or first discharge, or during use, of the electrochemical cell. Herein, the additive precursor (preferably having a structure as in Formula (II)) may react and/or solubilize with the electrolyte such that at least a portion of the additive precursor present in the electrochemical cell forms the additive (preferably having a structure as in Formula (I)). In some cases, a mixture comprising the additive and the additive precursor may be provided to the electrochemical cell, or a component of an electrochemical cell, as described herein. The ratio of the additive and the additive precursor may be, for example, at least 1:1000, at least 1:500, at least 1:200, at least 1:100, at least 1:50, at least 1:20, at least 1:10, at least 1:5, at least 1:2, at least 1:1, at least 2:1, at least 5:1, at least 10:1, at least 20:1, at least 50:1, at least 100:1, at least 200:1, or at least 500:1. Particularly, the ratio of the additive and the additive precursor may be less than or equal to 1000:1, less than or equal to 500:1, less than or equal to 200:1, less than or equal to 100:1, less than or equal to 50:1, less than or equal to 20:1, less than or equal to 10:1, less than or equal to 5:1, less than or equal to 2:1, less than or equal to 1:1, less than or equal to 1:2, less than or equal to 1:5, less than or equal to 1:10, less than or equal to 1:20, less than or equal to 1:50, less than or equal to 1:100, less than or equal to 1:200, or less than or equal to 1:500. Combinations of the above-referenced ranges are also possible (e.g., at least 1:1000 and less than or equal to 1000:1). Other ranges are also possible.

A mixture comprising the additive with substantially no additive precursor may be provided to the electrochemical cell or component of a cell or a mixture comprising the additive precursor with substantially no additive may be provided to the electrochemical cell or component of a cell. Methods for determining the ratio of the additive and additive are known within the art and may include weighing the additive and additive precursor before mixing the additive and/or additive precursor. In other cases, the ratio is measured at a point in time during the cycle life of the cell. Herein the cycling of an electrochemical cell may be stopped and the ratio is determined by measuring the wt% of the additive and the wt% of the additive precursor using gas chromatography-mass spectrometry. Other methods are also possible as described herein.

The additive and/or additive precursor may be deposited on one or more layers of an electrochemical cell (e.g., an anode, a cathode, a separator, a protective layer) using any suitable method. Non-limiting examples of suitable methods for depositing the additive and/or additive precursor on a layer of the electrochemical cell include vacuum sputtering, thermal evaporation, solution coating, wet spraying, dry spraying, aerosol deposition, vacuum deposition, particle electrostatic deposition, solvent evaporation, and the like. The additive and/or additive precursor may be mixed with a solvent (and/or other materials such as a filler, a polymer, a metal, a ceramic) and coated on a layer of the electrochemical cell (such as an electrode). The coating may be dried, such that the additive and/or additive precursor is in solid form thereby forming an additive layer.

The additive layer, if present, may have any suitable thickness. The additive layer (e.g., comprising the additive and/or additive precursor) described herein may have a thickness of at least 10 nm at least 20 nm, at least 50 nm, at least 100 nm, at least 200 nm, at least 500 nm, at least 1 micron, at least 5 microns, at least 10 microns, at least 15 microns, at least 20 microns, at least 25 microns, at least 30 microns, at least 40 microns, at least 50 microns, at least 70 microns, at least 100 microns, at least 200 microns, at least 500 microns, or at least 1 mm. The thickness of the additive layer may be less than or equal to 1 mm, less than or equal to 500 microns, less than or equal to 200 microns, less than or equal to 100 microns, less than or equal to 70 microns, less than or equal to 50 microns, less than or equal to 40 microns, less than or equal to 30 microns, less than or equal to 20 microns, less than or equal to 10 microns, less than or equal to 5 microns, less than or equal to 1 micron, less than or equal to 500 nm, less than or equal to 200 nm, less than or equal to 100 nm, less than or equal to 50 nm, or less than or equal to 20 nm. Other values are also possible. Combinations of the above-noted ranges are also possible.

The average thickness of the additive layer can be determined by, for example, using a drop gauge or scanning electron microscopy (SEM). Briefly, the additive layer can be imaged along a cross-section (e.g., by cutting the additive layer) after formation and the image may be acquired by SEM. The average thickness may be determined by taking an average of the thickness of the sample at several different locations along the cross-section (e.g., at least 5 locations). Those skilled in the art would be capable of selecting an appropriate magnification for imaging the sample.

As described herein, an electrochemical cell or an article for use in an electrochemical cell may include an electrode comprising an active electrode species. A first electrode described herein comprises a first active electrode species comprising lithium. In some cases, the first layer may be an anode (e.g., an anode of an electrochemical cell). In some cases, an additive layer comprising the additive and/or additive precursor is deposited on an anode. In certain cases, the additive and/or additive precursor is incorporated into the electrode (e.g., by mixing with an active electrode material prior to the formation of the anode).

Suitable active electrode materials for use as anode active electrode species in the electrochemical cells described herein include, but are not limited to, lithium metal such as lithium foil and lithium deposited onto a conductive substrate, and lithium alloys (e.g., lithium-aluminum alloys and lithium-tin alloys). Lithium can be contained as one film or as several films, optionally separated by a protective material such as a ceramic material or an ion conductive material described herein. Suitable ceramic materials include silica, alumina, or lithium containing glassy materials such as lithium phosphates, lithium aluminates, lithium silicates, lithium phosphorous oxynitrides, lithium tantalum oxide, lithium aluminosulfides, lithium titanium oxides, lithium silcosulfides, lithium germanosulfides, lithium aluminosulfides, lithium borosulfides, and lithium phosphosulfides, and combinations of two or more of the preceding. Suitable lithium alloys for use can include alloys of lithium and aluminum, magnesium, silicium (silicon), indium, and/or tin. While these materials may be preferred in some cases, other cell chemistries are also contemplated. The anode may comprise one or more binder materials (e.g., polymers, etc.).

The thickness of the anode may vary from, e.g., 2 to 200 microns. For instance, the anode may have a thickness of less than 200 microns, less than 100 microns, less than 50 microns, less than 25 microns, less than 10 microns, or less than 5 microns. The anode may have a thickness of greater than or equal to 2 microns, greater than or equal to 5 microns, greater than or equal to 10 microns, greater than or equal to 25 microns, greater than or equal to 50 microns, greater than or equal to 100 microns, or greater than or equal to 150 microns. Combinations of the above-referenced ranges are also possible (e.g., between 2 microns and 200 microns, between 2 microns and 100 microns, between 5 microns and 50 microns, between 5 microns and 25 microns, between 10 microns and 25 microns). Other ranges are also possible. The choice of the thickness may depend on cell design parameters such as the excess amount of lithium desired, cycle life, and the thickness of the cathode electrode.

An electrode described herein may be a cathode (e.g., a cathode of an electrochemical cell). For instance, an additive layer comprising the additive and/or additive precursor is deposited on a cathode. or the additive and/or additive precursor is incorporated into the cathode (e.g., by mixing with a cathode active electrode material prior to the formation of the cathode).

Suitable active electrode materials for use as cathode active electrode species in the cathode of the electrochemical cells described herein may include, but are not limited to, electroactive transition metal chalcogenides, electroactive conductive polymers, sulfur, carbon, and/or combinations thereof. As used herein, the term "chalcogenides" pertains to compounds that contain one or more of the elements of oxygen, sulfur, and selenium. Examples of suitable transition metal chalcogenides include, but are not limited to, the electroactive oxides, sulfides, and selenides of transition metals selected from the group consisting of Mn, V, Cr, Ti, Fe, Co, Ni, Cu, Y, Zr, Nb, Mo, Ru, Rh, Pd, Ag, Hf, Ta, W, Re, Os, and Ir. In certain cases, the transition metal chalcogenide is selected from the group consisting of the electroactive oxides of nickel, manganese, cobalt, and vanadium, and the electroactive sulfides of iron. In other cases, the cathode may include as an electroactive species elemental sulfur, sulfides, and/or polysulfides. In other cases, an intercalation electrode (e.g., a lithium-intercalation cathode) may be used. Non-limiting examples of suitable materials that may intercalate ions of an electroactive material (e.g., alkaline metal ions) include oxides, titanium sulfide, and iron sulfide. Additional examples include LixCoO₂, LiₓNiO₂, LixMnO₂, LixMn₂O₄, LixFePO₄, LiₓCoPO₄, LiₓMnPO₄, and LiₓNiPO₄, where (0 < x ≤ 1), and LiNiₓMn_{y}Co_{z}O₂ where (x + y + z =1).

A cathode may include one or more of the following materials: manganese dioxide, iodine, silver chromate, silver oxide and vanadium pentoxide, copper oxide, copper oxyphosphate, lead sulfide, copper sulfide, iron sulfide, lead bismuthate, bismuth trioxide, cobalt dioxide, copper chloride, manganese dioxide, and carbon. In other cases, the cathode active layer comprises an electroactive conductive polymer. Examples of suitable electroactive conductive polymers include, but are not limited to, electroactive and electronically conductive polymers selected from the group consisting of polypyrroles, polyanilines, polyphenylenes, polythiophenes, and polyacetylenes. Examples of conductive polymers include polypyrroles, polyanilines, and polyacetylenes.

Active electrode materials for use as cathode active materials in electrochemical cells described herein include electroactive sulfur-containing materials (e.g., lithium-sulfur electrochemical cells). "Electroactive sulfur-containing materials," as used herein, relates to cathode active materials which comprise the element sulfur in any form, wherein the electrochemical activity involves the oxidation or reduction of sulfur atoms or moieties. The nature of the electroactive sulfur-containing materials useful in the practice of this invention may vary widely, as known in the art. For example, the electroactive sulfur-containing material comprises elemental sulfur. According to another example, the electroactive sulfur-containing material comprises a mixture of elemental sulfur and a sulfur-containing polymer. Thus, suitable electroactive sulfur-containing materials may include, but are not limited to, elemental sulfur and organic materials comprising sulfur atoms and carbon atoms, which may or may not be polymeric. Suitable organic materials include those further comprising heteroatoms, conductive polymer segments, composites, and conductive polymers.

In certain cases, the sulfur-containing material (e.g., in an oxidized form) comprises a polysulfide moiety, Sm, selected from the group consisting of covalent Sm moieties, ionic Sm moieties, and ionic Sm₂- moieties, wherein m is an integer equal to or greater than 3. In some cases, m of the polysulfide moiety Sm of the sulfur-containing polymer is an integer equal to or greater than 6 or an integer equal to or greater than 8. In some cases, the sulfur-containing material may be a sulfur-containing polymer. In some cases, the sulfur-containing polymer has a polymer backbone chain and the polysulfide moiety Sm is covalently bonded by one or both of its terminal sulfur atoms as a side group to the polymer backbone chain. In certain cases, the sulfur-containing polymer has a polymer backbone chain and the polysulfide moiety Sm is incorporated into the polymer backbone chain by covalent bonding of the terminal sulfur atoms of the polysulfide moiety.

In some cases, the electroactive sulfur-containing material comprises more than 50% by weight of sulfur or more than 75% by weight of sulfur (e.g., more than 90% by weight of sulfur).

As will be known by those skilled in the art, the nature of the electroactive sulfur-containing materials described herein may vary widely including elemental sulfur and a mixture of elemental sulfur and a sulfur-containing polymer.

In some cases an electrochemical cell as described herein, comprises one or more cathodes comprising sulfur as a cathode active electrode species. Herein sometimes the cathode includes elemental sulfur as a cathode active electrode species.

In some case, the additive is chosen such that the additive is different from the anode active electrode species and different from the cathode active electrode species. In certain case, the additive precursor is chosen such that the additive precursor is different from the anode active electrode species and different from the cathode active electrode species.

Sometimes the cathode comprises a nitrate or other N-O compound as described in more detail herein.

In some cases a protective layer is in contact with one electrode. The protective layer or ion conductive layer may be a ceramic layer, a glassy layer, or a glassy-ceramic layer, e.g., an ion conducting ceramic/glass conductive to lithium ions. Suitable glasses and/or ceramics include, but are not limited to, those that may be characterized as containing a "modifier" portion and a "network" portion, as known in the art. The modifier may include a metal oxide of the metal ion conductive in the glass or ceramic. The network portion may include a metal chalcogenide such as, for example, a metal oxide or sulfide. For lithium metal and other lithium-containing electrodes, an ion conductive layer may be lithiated or contain lithium to allow passage of lithium ions across it. Ion conductive layers may include layers comprising a material such as lithium nitrides, lithium silicates, lithium borates, lithium aluminates, lithium phosphates, lithium phosphorus oxynitrides, lithium silicosulfides, lithium germanosulfides, lithium oxides (e.g., Li₂O, LiO, LiO₂, LiRO₂, where R is a rare earth metal), lithium lanthanum oxides, lithium titanium oxides, lithium borosulfides, lithium aluminosulfides, and lithium phosphosulfides, and combinations thereof. The selection of the ion conducting material will be dependent on a number of factors including, but not limited to, the properties of electrolyte, additive (and/or additive precursor) and cathode used in the cell.

In some cases, the ion conductive layer is a non-electroactive metal layer. The non-electroactive metal layer may comprise a metal alloy layer, e.g., a lithiated metal layer especially in the case where a lithium anode is employed. The lithium content of the metal alloy layer may vary from 0.5% by weight to 20% by weight, depending, for example, on the specific choice of metal, the desired lithium ion conductivity, and the desired flexibility of the metal alloy layer. Suitable metals for use in the ion conductive material include, but are not limited to, Al, Zn, Mg, Ag, Pb, Cd, Bi, Ga, In, Ge, Sb, As, and Sn. Sometimes, a combination of metals, such as the ones listed above, may be used in an ion conductive material.

The thickness of an ion conductive material layer may vary over a range from 1 nm to 10 microns. For instance, the thickness of the ion conductive material layer may be between 1-10 nm thick, between 10-100 nm thick, between 100-1000 nm thick, between 1-5 microns thick, or between 5-10 microns thick. The thickness of an ion conductive material layer may be, for example, less than or equal to 10 microns, less than or equal to 5 microns, less than or equal to 1000 nm, less than or equal to 500 nm, less than or equal to 250 nm, less than or equal to 100 nm, less than or equal to 50 nm, less than or equal to 25 nm, or less than or equal to 10 nm. The ion conductive layer may have a thickness of greater than or equal to 10 nm, greater than or equal to 25 nm, greater than or equal to 50 nm, greater than or equal to 100 nm, greater than or equal to 250 nm, greater than or equal to 500 nm, greater than or equal to 1000 nm, or greater than or equal to 1500 nm. Combinations of the above-referenced ranges are also possible (e.g., a thickness of greater than or equal to 10 nm and less than or equal to 500 nm). Other thicknesses are also possible. In some cases, the ion conductive layer has the same thickness as a polymer layer.

The ion conductive layer may be deposited by any suitable method such as sputtering, electron beam evaporation, vacuum thermal evaporation, laser ablation, chemical vapor deposition (CVD), thermal evaporation, plasma enhanced chemical vacuum deposition (PECVD), laser enhanced chemical vapor deposition, and jet vapor deposition. The technique used may depend on the type of material being deposited, the thickness of the layer, etc.

Sometimes the ion conductive material is non-polymeric. In certain cases, the ion conductive material is defined in part or in whole by a layer that is highly conductive toward lithium ions (or other ions) and minimally conductive toward electrons. In other words, the ion conductive material may be one selected to allow certain ions, such as lithium ions, to pass across the layer, but to impede electrons, from passing across the layer. In some cases, the ion conductive material forms a layer that allows only a single ionic species to pass across the layer (i.e., the layer may be a single-ion conductive layer). In other cases, the ion conductive material may be substantially conductive to electrons.

In some cases, the protective layer is a polymer layer comprising a polymeric material. Suitable polymer layers for use in electrochemical cells may be, for example, highly conductive towards lithium and minimally conductive towards electrons. Such polymers may include, for example, ionically conductive polymers, sulfonated polymers, and hydrocarbon polymers. The selection of the polymer will be dependent upon a number of factors including the properties of electrolyte, additive, and cathode used in the cell. Suitable ionically conductive polymers include, e.g., ionically conductive polymers known to be useful in solid polymer electrolytes and gel polymer electrolytes for lithium electrochemical cells, such as, for example, polyethylene oxides. Suitable sulfonated polymers include, e.g., sulfonated siloxane polymers, sulfonated polystyrene-ethylene-butylene polymers, and sulfonated polystyrene polymers. Suitable hydrocarbon polymers include, e.g., ethylene-propylene polymers, polystyrene polymers, and the like.

Polymer layers can also include crosslinked polymer materials formed from the polymerization of monomers such as alkyl acrylates, glycol acrylates, polyglycol acrylates, polyglycol vinyl ethers, polyglycol divinyl ethers, and those described in U.S. Patent No. 6,183.901 to Ying et al. of the common assignee for protective coating layers for separator layers. For example, one such crosslinked polymer material is polydivinyl poly(ethylene glycol). The crosslinked polymer materials may further comprise salts, for example, lithium salts, to enhance ionic conductivity. For instance, the polymer layer comprises a crosslinked polymer.

Other classes polymers that may be suitable for use in a polymer layer include, but are not limited to, polyamines (e.g., poly(ethylene imine) and polypropylene imine (PPI)); polyamides (e.g., polyamide (Nylon), poly(ε-caprolactam) (Nylon 6), poly(hexamethylene adipamide) (Nylon 66)), polyimides (e.g., polyimide, polynitrile, and poly(pyromellitimide-1,4-diphenyl ether) (Kapton)); vinyl polymers (e.g., polyacrylamide, poly(2-vinyl pyridine), poly(N-vinylpyrrolidone), poly(methylcyanoacrylate), poly(ethylcyanoacrylate), poly(butylcyanoacrylate), poly(isobutylcyanoacrylate), poly(vinyl acetate), poly (vinyl alcohol), poly(vinyl chloride), poly(vinyl fluoride), poly(2-vinyl pyridine), vinyl polymer, polychlorotrifluoro ethylene, and poly(isohexylcynaoacrylate)); polyacetals; polyolefins (e.g., poly(butene-1), poly(n-pentene-2), polypropylene, polytetrafluoroethylene); polyesters (e.g., polycarbonate, polybutylene terephthalate, polyhydroxybutyrate); polyethers (poly(ethylene oxide) (PEO), poly(propylene oxide) (PPO), poly(tetramethylene oxide) (PTMO)); vinylidene polymers (e.g., polyisobutylene, poly(methyl styrene), poly(methylmethacrylate) (PMMA), poly(vinylidene chloride), and poly(vinylidene fluoride)); polyaramides (e.g., poly(imino-1,3-phenylene iminoisophthaloyl) and poly(imino-1,4-phenylene iminoterephthaloyl)); polyheteroaromatic compounds (e.g., polybenzimidazole (PBI), polybenzobisoxazole (PBO) and polybenzobisthiazole (PBT)); polyheterocyclic compounds (e.g., polypyrrole); polyurethanes; phenolic polymers (e.g., phenol-formaldehyde); polyalkynes (e.g., polyacetylene); polydienes (e.g., 1,2-polybutadiene, cis or trans-1,4-polybutadiene); polysiloxanes (e.g., poly(dimethylsiloxane) (PDMS), poly(diethylsiloxane) (PDES), polydiphenylsiloxane (PDPS), and polymethylphenylsiloxane (PMPS)); and inorganic polymers (e.g., polyphosphazene, polyphosphonate, polysilanes, polysilazanes). The mechanical and electronic properties (e.g., conductivity, resistivity) of these polymers are known. Accordingly, those of ordinary skill in the art can choose suitable polymers for use in lithium batteries, e.g., based on their mechanical and/or electronic properties (e.g., ionic and/or electronic conductivity), and/or can modify such polymers to be ionically conducting (e.g., conductive towards single ions) and/or electronically conducting based on knowledge in the art, in combination with the description herein. For example, the polymer materials listed above may further comprise salts, for example, lithium salts (e.g., LiSCN, LiBr, Lil, LiClO₄, LiAsF₆, LiSO₃CF₃, LiSO₃CH₃, LiBF₄, LiB(Ph)₄, LiPF₆, LiC(SO₂CF₃)₃, and LiN(SO₂CF₃)₂), to enhance ionic conductivity.

The polymeric materials can be selected or formulated to have suitable physical/mechanical characteristics by, for example, tailoring the amounts of components of polymer blends, adjusting the degree of cross-linking (if any), etc.

As described herein, an electrochemical cell may include a separator. The separator generally comprises a polymeric material (e.g., polymeric material that does or does not swell upon exposure to electrolyte). In some electrochemical cells, the separator is located between the electrolyte and an electrode (e.g., an anode, a cathode).

In some cases, an additive layer comprising the additive and/or additive precursor is deposited on a separator. In certain cases, the additive and/or additive precursor is incorporated into the separator.

The separator can be configured to inhibit (e.g., prevent) physical contact between a first electrode and a second electrode, which could result in short circuiting of the electrochemical cell. The separator can be configured to be substantially electronically non-conductive, which can inhibit the degree to which the separator causes short circuiting of the electrochemical cell. All or portions of the separator can be formed of a material with a bulk electronic resistivity of at least 10⁴, at least 10⁵, at least 10¹⁰, at least 10¹⁵, or at least 10²⁰ Ohm-meters. Bulk electronic resistivity may be measured at room temperature (e.g., 25 degrees Celsius).

The separator can be ionically conductive, while in other case, the separator is substantially ionically non-conductive. The average ionic conductivity of the separator may be at least 10⁻⁷ S/cm, at least 10⁻⁶ S/cm, at least 10⁻⁵ S/cm, at least 10⁻⁴ S/cm, at least 10⁻² S/cm, at least 10⁻¹ S/cm., the average ionic conductivity of the separator may be less than or equal to 1 S/cm, less than or equal to 10⁻¹ S/cm, less than or equal to 10⁻² S/cm, less than or equal to 10⁻³ S/cm, less than or equal to 10⁻⁴ S/cm, less than or equal to 10⁻⁵ S/cm, less than or equal to 10⁻⁶ S/cm, less than or equal to 10⁻⁷ S/cm, or less than or equal to 10⁻⁸ S/cm. Combinations of the above-referenced ranges are also possible (e.g., an average ionic conductivity of at least 10⁻⁸ S/cm and less than or equal to 10⁻¹ S/cm). Other ion conductivities are also possible. Conductivity may be measured at room temperature (e.g., 25 degrees Celsius).

The average ion conductivity of the separator can be determined by pressing the separator between two copper cylinders at a pressure of up to 3 tons/cm². The average ion conductivity (i.e., the inverse of the average resistivity) can be measured at 500 kg/cm² increments using a conductivity bridge (i.e., an impedance measuring circuit) operating at 1 kHz. Sometimes the pressure is increased until changes in average ion conductivity are no longer observed in the sample.

The separator can be a solid. The separator may be porous to allow an electrolyte solvent to pass through it. In some cases, the separator does not substantially include a solvent (like in a gel), except for solvent that may pass through or reside in the pores of the separator. In other cases, a separator may be in the form of a gel.

A separator can be made of a variety of materials. The separator may be polymeric in some instances, or formed of an inorganic material (e.g., glass fiber filter papers) in other instances. Examples of suitable separator materials include, but are not limited to, polyolefins (e.g., polyethylenes, poly(butene-1), poly(n-pentene-2), polypropylene, polytetrafluoroethylene), polyamines (e.g., poly(ethylene imine) and polypropylene imine (PPI)); polyamides (e.g., polyamide (Nylon), poly(ε-caprolactam) (Nylon 6), poly(hexamethylene adipamide) (Nylon 66)), polyimides (e.g., polyimide, polynitrile, and poly(pyromellitimide-1,4-diphenyl ether) (Kapton®) (NOMEX®) (KEVLAR®)); polyether ether ketone (PEEK); vinyl polymers (e.g., polyacrylamide, poly(2-vinyl pyridine), poly(N-vinylpyrrolidone), poly(methylcyanoacrylate), poly(ethylcyanoacrylate), poly(butylcyanoacrylate), poly(isobutylcyanoacrylate), poly(vinyl acetate), poly (vinyl alcohol), poly(vinyl chloride), poly(vinyl fluoride), poly(2-vinyl pyridine), vinyl polymer, polychlorotrifluoro ethylene, and poly(isohexylcynaoacrylate)); polyacetals; polyesters (e.g., polycarbonate, polybutylene terephthalate, polyhydroxybutyrate); polyethers (poly(ethylene oxide) (PEO), poly(propylene oxide) (PPO), poly(tetramethylene oxide) (PTMO)); vinylidene polymers (e.g., polyisobutylene, poly(methyl styrene), poly(methylmethacrylate) (PMMA), poly(vinylidene chloride), and poly(vinylidene fluoride)); polyaramides (e.g., poly(imino-1,3-phenylene iminoisophthaloyl) and poly(imino-1,4-phenylene iminoterephthaloyl)); polyheteroaromatic compounds (e.g., polybenzimidazole (PBI), polybenzobisoxazole (PBO) and polybenzobisthiazole (PBT)); polyheterocyclic compounds (e.g., polypyrrole); polyurethanes; phenolic polymers (e.g., phenol-formaldehyde); polyalkynes (e.g., polyacetylene); polydienes (e.g., 1,2-polybutadiene, cis or trans-1,4-polybutadiene); polysiloxanes (e.g., poly(dimethylsiloxane) (PDMS), poly(diethylsiloxane) (PDES), polydiphenylsiloxane (PDPS), and polymethylphenylsiloxane (PMPS)); and inorganic polymers (e.g., polyphosphazene, polyphosphonate, polysilanes, polysilazanes)., The polymer may be selected from poly(n-pentene-2), polypropylene, polytetrafluoroethylene, polyamides (e.g., polyamide (Nylon), poly(ε-caprolactam) (Nylon 6), poly(hexamethylene adipamide) (Nylon 66)), polyimides (e.g., polynitrile, and poly(pyromellitimide-1,4-diphenyl ether) (Kapton®) (NOMEX®) (KEVLAR®)), polyether ether ketone (PEEK), and combinations thereof.

The mechanical and electronic properties (e.g., conductivity, resistivity) of these polymers are known. Accordingly, those of ordinary skill in the art can choose suitable materials based on their mechanical and/or electronic properties (e.g., ionic and/or electronic conductivity/resistivity), and/or can modify such polymers to be ionically conducting (e.g., conductive towards single ions) based on knowledge in the art, in combination with the description herein. For example, the polymer materials listed above and herein may further comprise salts, for example, lithium salts (e.g., LiSCN, LiBr, Lil, LiClO₄, LiAsF₆, LiSO₃CF₃, LiSO₃CH₃, LiBF₄, LiB(Ph)₄, LiPF₆, LiC(SO₂CF₃)₃, and LiN(SO₂CF₃)₂), to enhance ionic conductivity, if desired.

The separator may be porous. The separator pore size may be, for example, less than 5 microns. The separator pore size may be between 50 nm and 5 microns, between 50 nm and 500 nm, between 100 nm and 300 nm, between 300 nm and 1 micron, between 500 nm and 5 microns. The pore size may be less than or equal to 5 microns, less than or equal to 1 micron, less than or equal to 500 nm, less than or equal to 300 nm, less than or equal to 100 nm, or less than or equal to 50 nm. The pore size may be greater than 50 nm, greater than 100 nm, greater than 300 nm, greater than 500 nm, or greater than 1 micron. Other values are also possible. Combinations of the above-noted ranges are also possible (e.g., a pore size of less than 300 nm and greater than 100 nm). In other cases, the separator may be substantially non-porous.

As described herein, the electrochemical cell comprises an electrolyte. The electrolytes used in electrochemical or battery cells can function as a medium for the storage and transport of ions, and in the special case of solid electrolytes and gel electrolytes, these materials may additionally function as a separator between the anode and the cathode. Any suitable liquid, solid, or gel material capable of storing and transporting ions may be used, so long as the material facilitates the transport of ions (e.g., lithium ions) between the anode and the cathode. The electrolyte is electronically non-conductive to prevent short circuiting between the anode and the cathode. The electrolyte may comprise a non-solid electrolyte.

In some cases, the additive and/or additive precursor is at least partially soluble in the electrolyte. In certain cases, the additive and/or additive precursor is substantially soluble in the electrolyte. In some cases, the additive and/or additive precursor has a solubility in the electrolyte of at least 1% (w/w), at least 2% (w/w), at least 5% (w/w), at least 10% (w/w), or at least 15% (w/w). In certain cases, the additive and/or additive precursor has a solubility in the electrolyte of less than or equal to 20% (w/w), less than or equal to 15% (w/w), less than or equal to 10% (w/w), less than or equal to 5% (w/w), or less than or equal to 2% (w/w). Combinations of the above-referenced ranges are also possible (e.g., at least 1% (w/w) and less than or equal to 20% (w/w)). Other ranges are also possible. Solubility, as used herein, is measured at 25 °C and 1 atm.

In some cases, an electrolyte is in the form of a layer having a particular thickness. An electrolyte layer may have a thickness of, for example, at least 1 micron, at least 5 microns, at least 10 microns, at least 15 microns, at least 20 microns, at least 25 microns, at least 30 microns, at least 40 microns, at least 50 microns, at least 70 microns, at least 100 microns, at least 200 microns, at least 500 microns, or at least 1 mm. In some cases, the thickness of the electrolyte layer is less than or equal to 1 mm, less than or equal to 500 microns, less than or equal to 200 microns, less than or equal to 100 microns, less than or equal to 70 microns, less than or equal to 50 microns, less than or equal to 40 microns, less than or equal to 30 microns, less than or equal to 20 microns, less than or equal to 10 microns, or less than or equal to 50 microns. Other values are also possible. Combinations of the above-noted ranges are also possible.

In some cases, the electrolyte includes a non-aqueous electrolyte. Suitable non-aqueous electrolytes may include organic electrolytes such as liquid electrolytes, gel polymer electrolytes, and solid polymer electrolytes. These electrolytes may optionally include one or more ionic electrolyte salts (e.g., to provide or enhance ionic conductivity) as described herein. Examples of useful non-aqueous liquid electrolyte solvents include, but are not limited to, non-aqueous organic solvents, such as, for example, N-methyl acetamide, acetonitrile, acetals, ketals, esters (e.g., esters of carbonic acid), carbonates (e.g., ethylene carbonate, dimethyl carbonate), sulfones, sulfites, sulfolanes, suflonimidies (e.g., bis(trifluoromethane)sulfonimide lithium salt). aliphatic ethers, acyclic ethers, cyclic ethers, glymes, polyethers, phosphate esters (e.g., hexafluorophosphate), siloxanes, dioxolanes, N-alkylpyrrolidones, nitrate containing compounds, substituted forms of the foregoing, and blends thereof. Examples of acyclic ethers that may be used include, but are not limited to, diethyl ether, dipropyl ether, dibutyl ether, dimethoxymethane, trimethoxymethane, 1,2-dimethoxyethane, diethoxyethane, 1,2-dimethoxypropane, and 1,3-dimethoxypropane. Examples of cyclic ethers that may be used include, but are not limited to, tetrahydrofuran, tetrahydropyran, 2-methyltetrahydrofuran, 1,4-dioxane, 1,3-dioxolane, and trioxane. Examples of polyethers that may be used include, but are not limited to, diethylene glycol dimethyl ether (diglyme), triethylene glycol dimethyl ether (triglyme), tetraethylene glycol dimethyl ether (tetraglyme), higher glymes, ethylene glycol divinyl ether, diethylene glycol divinyl ether, triethylene glycol divinyl ether, dipropylene glycol dimethyl ether, and butylene glycol ethers. Examples of sulfones that may be used include, but are not limited to, sulfolane, 3-methyl sulfolane, and 3-sulfolene. Fluorinated derivatives of the foregoing are also useful as liquid electrolyte solvents.

Mixtures of the solvents described herein may also be used. For example, mixtures of solvents are selected from the group consisting of 1,3-dioxolane and dimethoxyethane, 1,3-dioxolane and diethyleneglycol dimethyl ether, 1,3-dioxolane and triethyleneglycol dimethyl ether, and 1,3-dioxolane and sulfolane. The weight ratio of the two solvents in the mixtures may range, in some cases, from 5 wt% : 95 wt% to 95 wt% : 5 wt%.

Non-limiting examples of suitable gel polymer electrolytes include polyethylene oxides, polypropylene oxides, polyacrylonitriles, polysiloxanes, polyimides, polyphosphazenes, polyethers, sulfonated polyimides, perfluorinated membranes (NAFION resins), polydivinyl polyethylene glycols, polyethylene glycol diacrylates, polyethylene glycol dimethacrylates, derivatives of the foregoing, copolymers of the foregoing, cross-linked and network structures of the foregoing, and blends of the foregoing.

Non-limiting examples of suitable solid polymer electrolytes include polyethers, polyethylene oxides, polypropylene oxides, polyimides, polyphosphazenes, polyacrylonitriles, polysiloxanes, derivatives of the foregoing, copolymers of the foregoing, cross-linked and network structures of the foregoing, and blends of the foregoing.

In some cases, the non-aqueous electrolyte comprises at least one lithium salt. For example, in some cases, the at least one lithium salt is selected from the group consisting of LiNO₃, LiPF₆, LiBF₄, LiClO₄, LiAsF₆, Li₂SiF₆, LiSbF₆, LiAlCl₄, lithium bis-oxalatoborate, LiCF₃SO₃, LiN(SO₂F)₂, LiC(CₙF₂ₙ₊₁SO₂)₃, wherein n is an integer in the range of from 1 to 20, and (CₙF₂ₙ₊₁SO₂)ₘXLi with n being an integer in the range of from 1 to 20, m being 1 when X is selected from oxygen or sulfur, m being 2 when X is selected from nitrogen or phosphorus, and m being 3 when X is selected from carbon or silicon.

In some cases, specific combinations of additives and lithium salts in the electrolyte may be present in an electrochemical cell or component(s) of an electrochemical cell. For example, an electrochemical cell or component(s) of an electrochemical cell comprises both lithium bis-oxalatoborate and an additive having a structure as in Formula (I) 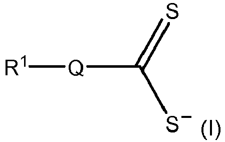 wherein each occurrence of Q is independently selected from the group consisting of O, S, NR², each R¹ and R² can be the same or different, optionally connected, and are independently selected from the group consisting of substituted and unsubstituted, branched and unbranched aliphatic, substituted and unsubstituted cyclic, substituted and unsubstituted, branched and unbranched acyclic, substituted and unsubstituted, branched and unbranched heteroaliphatic, substituted and unsubstituted, branched and unbranched acyl, substituted and unsubstituted aryl, and substituted and unsubstituted heteroaryl, and wherein the additive and any additive precursor is/are different from the first and second active electrode species. In some cases, the additive that comprises a structure as in Formula (I) and lithium bis-oxalatoborate may be present in an electrolyte.

In some cases, the electrochemical cell may comprise both lithium bis-oxalatoborate and one or more of an ethyl xanthate salt, a diethiocarbamate salt, and an isopropyl xanthate salt as described herein. In some cases, such components may be present in an electrolyte. The electrochemical cell may also include first and second electrodes as described herein.

In some cases, the combination of lithium bis-oxalatoborate with an additive comprising a structure as in Formula (I) may be present in an electrochemical cell, wherein the electrochemical cell comprises a first electrode as described herein (e.g., a lithium-containing electrode) and a second electrode. The second electrode may be an intercalation electrode (e.g., a lithium intercalation electrode) such as LiXCoO₂, LiₓNiO₂, LiₓMnO₂, LixMn₂O₄, LixFePO₄, LiₓCoPO₄, LiₓMnPO₄, and LiₓNiPO₄, where (0 < x ≤ 1), and LiNiₓMn_{y}Co_{z}O₂ where (x + y + z =1). Formula (I) is represented by: 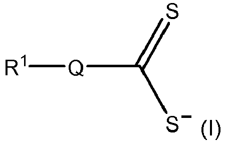 wherein each occurrence of Q is independently selected from the group consisting of O, S, NR², each R¹ and R² are be the same or different, optionally connected, and are independently selected from the group consisting of substituted and unsubstituted, branched and unbranched aliphatic, substituted and unsubstituted cyclic, substituted and unsubstituted, branched and unbranched acyclic, substituted and unsubstituted, branched and unbranched heteroaliphatic, substituted and unsubstituted, branched and unbranched acyl, substituted and unsubstituted aryl, and substituted and unsubstituted heteroaryl, and wherein the additive and any additive precursor is/are different from the first and second active electrode species. In some cases, the additive that comprises a structure as in Formula (I) and lithium bis-oxalatoborate may be present in an electrolyte.

In some cases, an electrolyte, a cathode, an additive, and/or a component including an additive (e.g. a layer) comprises a nitrate or other N-O compound. Examples of NO compounds include, but are not limited to, families such as inorganic nitrates, organic nitrates, inorganic nitrites, organic nitrites, organic nitro compounds, compounds with negatively, neutral and positively charged NOₓ groups, and other organic N-O compounds. Examples of inorganic nitrates that may be used include, but are not limited to, lithium nitrate, potassium nitrate, cesium nitrate, barium nitrate, and ammonium nitrate. Examples of organic nitrates that may be used include, but are not limited to, dialkyl imidazolium nitrates, guanidine nitrate, and pyridine nitrate. Examples of inorganic nitrites that may be used include, but are not limited to, lithium nitrite, potassium nitrite, cesium nitrite, and ammonium nitrite. Examples of organic nitrites that may be used include, but are not limited to, ethyl nitrite, propyl nitrite, butyl nitrite, pentyl nitrite, and octyl nitrite.

Examples organic nitro compounds that may be used include, but are not limited to, nitromethane, nitropropane, nitrobutanes, nitrobenzene, dinitrobenzene, nitrotoluene, dinitrotoluene, nitropyridine, and dinitropyridine. Examples of other organic N-O compounds that may be used include, but are not limited to, pyridine N-oxide, alkylpyridine N-oxides, and tetramethyl piperidine N-oxyl (TEMPO). These and other additives are described in more detail in U.S. Patent No. 7,553,590, entitled "Electrolytes for lithium sulfur cells." Electrochemical cells comprising an additive and/or additive precursor described herein and a nitrate may, in some cases, increase the life cycle of electrochemical cells as compared to electrochemical cells without the additive or additive precursor.

In some cases, the nitrate or other N-O compound is present in an electrolyte, a cathode, an additive, and/or a component including an additive (e.g. a layer) in an amount of at least 0.01 wt%, at least 0.05 wt%, at least 0.1 wt%, at least 0.5 wt%, at least 1 wt%, at least 2 wt%, at least 5 wt%, at least 10 wt%, or at least 15 wt% versus the total electrolyte weight, total cathode weight, total additive weight, and/or total weight of the component including an additive (e.g., a layer), respectively. In certain cases, the nitrate or other NO compound is present in the electrolyte, a cathode, an additive, and/or a component including an additive (e.g. a layer) in an amount of less than or equal to 20 wt%, less than or equal to 15 wt%, less than or equal to 10 wt%, less than or equal to 5 wt%, less than or equal to 2 wt%, less than or equal to 1 wt%, less than or equal to 0.5 wt%, less than or equal to 0.1 wt%, or less than or equal to 0.05 wt% versus the total electrolyte weight, total cathode weight, total additive weight, and/or total weight of the component including an additive (e.g., a layer), respectively. Combinations of the above-referenced ranges are also possible (e.g., at least 0.01 wt% and less than or equal to 20 wt%). Other ranges are also possible.

In some cases, an electrochemical cell described herein comprises at least one current collector. Materials for the current collector may be selected, in some cases, from metals (e.g., copper, nickel, aluminum, passivated metals, and other appropriate metals), metallized polymers, electrically conductive polymers, polymers comprising conductive particles dispersed therein, and other appropriate materials. In certain electrochemical cells, the current collector is deposited onto the electrode layer using physical vapor deposition, chemical vapor deposition, electrochemical deposition, sputtering, doctor blading, flash evaporation, or any other appropriate deposition technique for the selected material. In some cases, the current collector may be formed separately and bonded to the electrode structure. It should be appreciated, however, that in some electrochemical cells a current collector separate from the electroactive layer may not be needed.

For convenience, certain terms employed in the specification, examples, and appended claims are listed here. Definitions of specific functional groups and chemical terms are described in more detail below. For purposes of this invention, the chemical elements are identified in accordance with the Periodic Table of the Elements, CAS version, Handbook of Chemistry and Physics, 75th Ed., inside cover, and specific functional groups are generally defined as described therein. Additionally, general principles of organic chemistry, as well as specific functional moieties and reactivity, are described in Organic Chemistry, Thomas Sorrell, University Science Books, Sausalito: 1999.

The term "aliphatic," as used herein, includes both saturated and unsaturated, nonaromatic, straight chain (i.e., unbranched), branched, acyclic, and cyclic (i.e., carbocyclic) hydrocarbons, which are optionally substituted with one or more functional groups. As will be appreciated by one of ordinary skill in the art, "aliphatic" is intended herein to include, but is not limited to, alkyl, alkenyl, alkynyl, cycloalkyl, cycloalkenyl, and cycloalkynyl moieties. Thus, as used herein, the term "alkyl" includes straight, branched and cyclic alkyl groups. An analogous convention applies to other generic terms such as "alkenyl", "alkynyl", and the like. Furthermore, as used herein, the terms "alkyl", "alkenyl", "alkynyl", and the like encompass both substituted and unsubstituted groups. In certain cases, as used herein, "aliphatic" is used to indicate those aliphatic groups (cyclic, acyclic, substituted, unsubstituted, branched or unbranched) having 1-20 carbon atoms. Aliphatic group substituents include, but are not limited to, any of the substituents described herein, that result in the formation of a stable moiety (e.g., aliphatic, alkyl, alkenyl, alkynyl, heteroaliphatic, heterocyclic, aryl, heteroaryl, acyl, oxo, imino, thiooxo, cyano, isocyano, amino, azido, nitro, hydroxyl, thiol, halo, aliphaticamino, heteroaliphaticamino, alkylamino, heteroalkylamino, arylamino, heteroarylamino, alkylaryl, arylalkyl, aliphaticoxy, heteroaliphaticoxy, alkyloxy, heteroalkyloxy, aryloxy, heteroaryloxy, aliphaticthioxy, heteroaliphaticthioxy, alkylthioxy, heteroalkylthioxy, arylthioxy, heteroarylthioxy, acyloxy, and the like, each of which may or may not be further substituted).

The term "alkyl" refers to the radical of saturated aliphatic groups, including straight-chain alkyl groups, branched-chain alkyl groups, cycloalkyl (alicyclic) groups, alkyl substituted cycloalkyl groups, and cycloalkyl substituted alkyl groups. The alkyl groups may be optionally substituted, as described more fully below. Examples of alkyl groups include, but are not limited to, methyl, ethyl, propyl, isopropyl, butyl, isobutyl, tert-butyl, 2-ethylhexyl, cyclopropyl, cyclobutyl, cyclopentyl, cyclohexyl, and the like. "Heteroalkyl" groups are alkyl groups wherein at least one atom is a heteroatom (e.g., oxygen, sulfur, nitrogen, phosphorus, etc.), with the remainder of the atoms being carbon atoms. Examples of heteroalkyl groups include, but are not limited to, alkoxy, poly(ethylene glycol)-, alkyl-substituted amino, tetrahydrofuranyl, piperidinyl, morpholinyl, etc.

The terms "alkenyl" and "alkynyl" refer to unsaturated aliphatic groups analogous to the alkyl groups described above, but containing at least one double or triple bond respectively. The "heteroalkenyl" and "heteroalkynyl" refer to alkenyl and alkynyl groups as described herein in which one or more atoms is a heteroatom (e.g., oxygen, nitrogen, sulfur, and the like).

The term "aryl" refers to an aromatic carbocyclic group having a single ring (e.g., phenyl), multiple rings (e.g., biphenyl), or multiple fused rings in which at least one is aromatic (e.g., 1,2,3,4-tetrahydronaphthyl, naphthyl, anthryl, or phenanthryl), all optionally substituted. "Heteroaryl" groups are aryl groups wherein at least one ring atom in the aromatic ring is a heteroatom, with the remainder of the ring atoms being carbon atoms. Examples of heteroaryl groups include furanyl, thienyl, pyridyl, pyrrolyl, N lower alkyl pyrrolyl, pyridyl N oxide, pyrimidyl, pyrazinyl, imidazolyl, indolyl and the like, all optionally substituted.

The terms "amine" and "amino" refer to both unsubstituted and substituted amines, e.g., a moiety that can be represented by the general formula: N(R')(R")(R"') wherein R', R", and R'" each independently represent a group permitted by the rules of valence.

The terms "acyl," "carboxyl group," or "carbonyl group" are recognized in the art and can include such moieties as can be represented by the general formula: 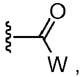 wherein W is H, OH, O-alkyl, O-alkenyl, or a salt thereof. Where W is O-alkyl, the formula represents an "ester." Where W is OH, the formula represents a "carboxylic acid." In general, where the oxygen atom of the above formula is replaced by sulfur, the formula represents a "thiolcarbonyl" group. Where W is a S-alkyl, the formula represents a "thiolester." Where W is SH, the formula represents a "thiolcarboxylic acid." On the other hand, where W is alkyl, the above formula represents a "ketone" group. Where W is hydrogen, the above formula represents an "aldehyde" group.

As used herein, the term "heteroaromatic" or "heteroaryl" means a monocyclic or polycyclic heteroaromatic ring (or radical thereof) comprising carbon atom ring members and one or more heteroatom ring members (such as, for example, oxygen, sulfur or nitrogen). Typically, the heteroaromatic ring has from 5 to 14 ring members in which at least 1 ring member is a heteroatom selected from oxygen, sulfur, and nitrogen. In certain cases the heteroaromatic ring is a 5 or 6 membered ring and may contain from 1 to 4 heteroatoms. In other cases, the heteroaromatic ring system has a 7 to 14 ring members and may contain from 1 to 7 heteroatoms. Representative heteroaryls include pyridyl, furyl, thienyl, pyrrolyl, oxazolyl, imidazolyl, indolizinyl, thiazolyl, isoxazolyl, pyrazolyl, isothiazolyl, pyridazinyl, pyrimidinyl, pyrazinyl, triazinyl, triazolyl, pyridinyl, thiadiazolyl, pyrazinyl, quinolyl, isoquinolyl, indazolyl, benzoxazolyl, benzofuryl, benzothiazolyl, indolizinyl, imidazopyridinyl, isothiazolyl, tetrazolyl, benzimidazolyl, benzoxazolyl, benzothiazolyl, benzothiadiazolyl, benzoxadiazolyl, carbazolyl, indolyl, tetrahydroindolyl, azaindolyl, imidazopyridyl, qunizaolinyl, purinyl, pyrrolo[2,3]pyrimidyl, pyrazolo[3,4]pyrimidyl, benzo(b)thienyl, and the like. These heteroaryl groups may be optionally substituted with one or more substituents.

The term "substituted" is contemplated to include all permissible substituents of organic compounds, "permissible" being in the context of the chemical rules of valence known to those of ordinary skill in the art. In some cases, "substituted" may generally refer to replacement of a hydrogen with a substituent as described herein. However, "substituted," as used herein, does not encompass replacement and/or alteration of a key functional group by which a molecule is identified, e.g., such that the "substituted" functional group becomes, through substitution, a different functional group. For example, a "substituted phenyl" must still comprise the phenyl moiety and cannot be modified by substitution, in this definition, to become, e.g., a heteroaryl group such as pyridine. In a broad aspect, the permissible substituents include acyclic and cyclic, branched and unbranched, carbocyclic and heterocyclic, aromatic and nonaromatic substituents of organic compounds. Illustrative substituents include, for example, those described herein. The permissible substituents can be one or more and the same or different for appropriate organic compounds. For purposes of this invention, the heteroatoms such as nitrogen may have hydrogen substituents and/or any permissible substituents of organic compounds described herein which satisfy the valencies of the heteroatoms. This invention is not intended to be limited in any manner by the permissible substituents of organic compounds.

Examples of substituents include, but are not limited to, alkyl, aryl, aralkyl, cyclic alkyl, heterocycloalkyl, hydroxy, alkoxy, aryloxy, perhaloalkoxy, aralkoxy, heteroaryl, heteroaryloxy, heteroarylalkyl, heteroaralkoxy, azido, amino, halogen, alkylthio, oxo, acyl, acylalkyl, carboxy esters, carboxyl, carboxamido, nitro, acyloxy, aminoalkyl, alkylaminoaryl, alkylaryl, alkylaminoalkyl, alkoxyaryl, arylamino, aralkylamino, alkylsulfonyl, carboxamidoalkylaryl, carboxamidoaryl, hydroxyalkyl, haloalkyl, alkylaminoalkylcarboxy, aminocarboxamidoalkyl, alkoxyalkyl, perhaloalkyl, arylalkyloxyalkyl, and the like.

### EXAMPLES

The following examples and figures are intended to illustrate certain aspects of the present invention, but do not exemplify the full scope of the invention. The figures are schematic and are not intended to be drawn to scale. In the figures, each identical or nearly identical component illustrated is typically represented by a single numeral. For purposes of clarity, not every component is labelled in every figure, nor is every component shown where illustration is not necessary to allow those of ordinary skill in the art to understand the invention.

In the figures:
FIGs. 1A-1F are schematics of articles incorporating additives and/or additive precursors, according to some examples; and
FIGs. 2-5 show plots of cycling behavior of electrochemical cells incorporating additives, according to some examples.

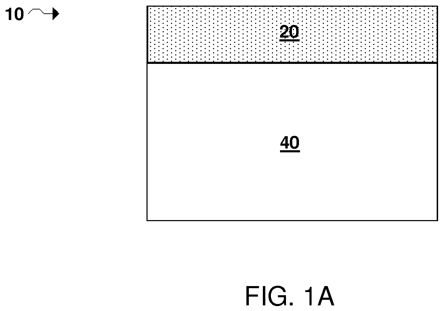

FIG. 1A shows an example of an article that can be incorporated into an electrochemical cell. Article 10 includes an electrode 20 (e.g., an anode or a cathode) that comprises an electroactive material (e.g., lithium metal) and an electrolyte 40 adjacent the electrode. The electrode may include an electroactive material (e.g., an anode active electrode material, a cathode active electrode material). The electrolyte can function as a medium for the storage and transport of ions. The electrolyte may have any suitable configuration such as a liquid electrolyte, a solid electrolyte, or a gel polymer electrolyte, as described in more detail herein. In some examples, the additive and/or additive precursor may be at least partially soluble in an electrolyte.

In some examples, the additive having a structure as in Formula (I) and/or the additive precursor having a structure as in Formula (II) may be added to the electrolyte prior or during to formation of the electrochemical cell such that at least a portion (or all) of the additive and/or additive precursor dissolves within the electrolyte. In certain examples, the additive and/or additive precursor is added to the electrolyte after formation of the electrochemical cell (e.g., during cycling). For example, the additive and/or additive precursor may initially be a part of a different component of the electrochemical cell (e.g., as part of the anode, cathode, and/or separator), such as upon formation of the electrochemical cell. In some cases, minimal or no amount of the additive and/or additive precursor may be present in the electrolyte at this time. After a certain amount of time and/or upon use (e.g., first use or first discharge, subsequent use) of the electrochemical cell, all or portions of the additive and/or additive precursor may migrate into the electrolyte.

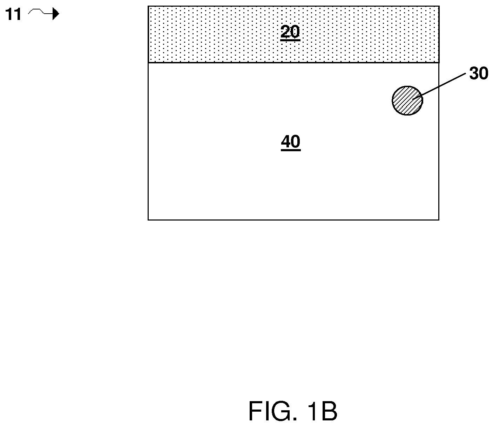

In certain examples, at least a portion of (or all of) the additive and/or additive precursor may be in solid form (e.g., as one or more particles or as one or more solid structures) in the electrochemical cell at at least one point in time in the life of the electrochemical cell (e.g., prior to first use or first discharge of the electrochemical cell). In some such examples, the solid additive and/or additive precursor may advantageously act as a reservoir of additive such that the additive and/or additive precursor dissolves over time in the electrolyte (e.g., during charge/discharge of the electrochemical cell). For example, as shown illustratively in FIG. 1B, an article 11 includes electrode 20 including an electroactive material, electrolyte 40 adjacent electrode 20, and a reservoir 30 comprising the additive and/or additive precursor. In some cases, the solid additive and/or additive precursor is in the form of a solid particle. For example, the electrochemical cell comprises a plurality of additive solid particles and/or a plurality of additive precursor solid particles (e.g., in the electrolyte, in an electrode, in a layer, and/or in a separator).

If particles of additives and/or additive precursors are present, the particles may have any suitable size. In some examples, an average largest cross-sectional dimension of a plurality of additive and/or additive precursor solid particles may be, for example, less than or equal to 100 microns, less than or equal to 50 microns, less than or equal to 25 microns, less than or equal to 10 microns, less than or equal to 5 microns, less or equal to 2 microns, less than or equal to 1 micron, less than or equal to 800 nm, less than or equal to 500 nm, or less than or equal to 200 nm. In some examples, the average largest cross-sectional dimension of the plurality of particles may be greater than or equal to 100 nm, greater than or equal to 200 nm, greater than or equal to 500 nm, greater than or equal to 800 nm, greater than or equal to 1 micron, greater than or equal to 2 microns, greater than or equal to 5 microns, greater than or equal to 10 microns, greater than or equal to 25 microns, or greater than or equal to 50 microns. Combinations of the above-referenced ranges are also possible (e.g., a largest cross-sectional dimension of less than 100 microns and greater than 100 nm).

The average largest cross-sectional dimension of the plurality of particles may be determined, for example, by imaging the particles with a scanning electron microscope (SEM). An image may be acquired at a magnification between 10X to 100,000X, depending on the overall dimensions of the plurality of particles. Those skilled in the art would be capable of selecting an appropriate magnification for imaging the sample. The average largest cross-sectional dimension of the plurality of particles can be determined by taking the longest cross-sectional dimension of each particle in the image and averaging the longest cross-sectional dimensions (e.g., averaging the longest cross-sectional dimensions for 50 particles).

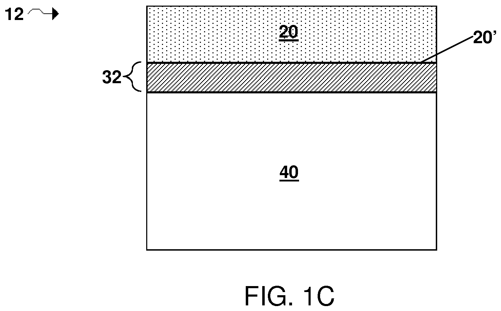

In some examples, the additive and/or additive precursor is in solid form and deposited as a layer on or adjacent one or more layers in the electrochemical cell. Referring to FIG. 1C, an article 12 comprises electrode 20, electrolyte 40 adjacent electrode 20, and an additive layer 32 disposed on or adjacent at least a portion of electrode active surface 20'. As shown illustratively in the figure, the additive layer may be in direct contact with the electrolyte, or one or more intervening layer(s) may be present (not shown). In some examples, the additive layer may be adjacent an anode. In some examples, the additive layer may be adjacent a cathode. The additive layer can include, for example, the additive and/or the additive precursor and any suitable optional components (e.g., a filler, a polymer, a metal, a ceramic, porous silica sol-gel). In some examples, a component included in an additive layer comprises a polymeric binder. Non-limiting examples of suitable polymeric binders include polyethylene oxide, polyethylene, and polyvinylidene fluoride. In certain examples, the component (e.g., a component comprising a polymeric binder) may be soluble with and/or may substantially dissolve in an electrolyte. In some cases, the optional component may swell in the presence of an electrolyte.

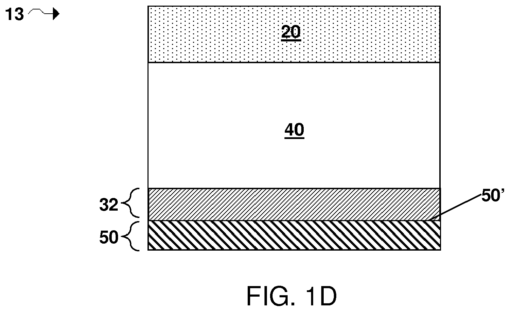

In certain examples, the electrochemical cell comprises a separator and the additive layer may be deposited on at least a portion of a surface of the separator, or within the separator. For example, as shown illustratively in FIG. 1D, an article 13 comprises electrode 20, electrolyte 40 adjacent the electrode, and a separator 50 adjacent the electrolyte. In some examples, the article comprises an additive layer 32 disposed on at least a portion of separator 50 at separator surface 50'. The additive layer may advantageously serve as a reservoir such that the additive and/or additive precursor dissolves over time in the electrolyte (e.g., during charge/discharge of the electrochemical cell).

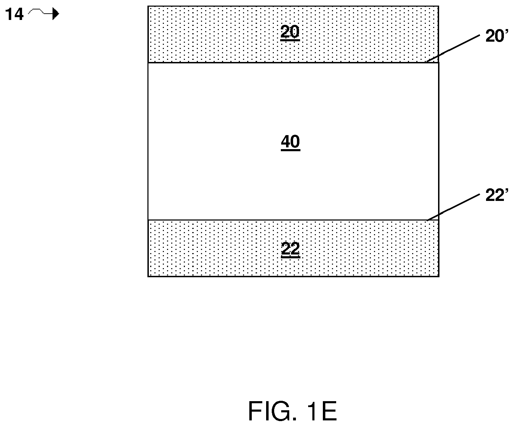

In some cases, the article is in the form of an electrochemical cell comprising a first electrode (e.g., an anode), a second electrode (e.g., a cathode), and an electrolyte disposed between the first and second electrodes. For example, as shown illustratively in FIG. 1E, article 14 comprises first electrode 20, second electrode 22, and electrolyte 40 disposed between the first and second electrodes. In some examples, the additive and/or additive precursor may be present as a solid additive layer on the first electrode and/or the second electrode, as described herein. In some examples, the additive and/or additive precursor may be incorporated into the electrode and/or the separator. For example, the additive and/or additive precursor may be added (e.g., in solid form) to a slurry comprising an electroactive material prior to the formation of an electrode. In some such examples, the electrode incorporating the additive and/or additive precursor may serve as a reservoir such that the additive and/or additive precursor dissolves in an electrolyte in contact with the electrode and/or upon use of the electrochemical cell.

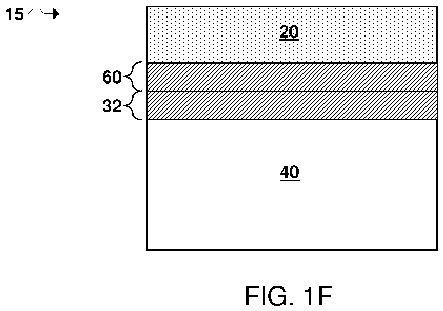

For example, an additive layer 32 may be disposed directly on one or more electrodes, or may be disposed on a protective layer in contact with the electrode. In an example shown in FIG. 1F, additive layer 32 may be disposed directly on protective layer 60 which is in direct contact with electrode 20. Other configurations are also possible, e.g. an additive layer 32 may be disposed directly on one or more electrodes.

A layer referred to as being "disposed on," "disposed between," "on," or "adjacent" another layer(s) means that it can be directly disposed on, disposed between, on, or adjacent the layer(s), or an intervening layer may also be present. For example, an additive layer described herein that is adjacent an anode or cathode may be directly adjacent (e.g., may be in direct physical contact with) the anode or cathode, or an intervening layer (e.g., another protective layer) may be positioned between the anode and the additive layer. A layer that is "directly adjacent," "directly on," or "in contact with," another layer means that no intervening layer is present. It should also be understood that when a layer is referred to as being "disposed on," "disposed between," "on," or "adjacent" another layer(s), it may be covered by, on or adjacent the entire layer(s) or a part of the layer(s).

It should be appreciated that FIGs. 1A-1F are exemplary illustrations and that not all components shown in the figure need be present, or, additional components not shown in the figure may be present. For example, an additive layer 32 may be disposed directly on one or more electrodes, or may be disposed on a protective layer in contact with the electrode. In an example shown in FIG. 1F, additive layer 32 may be 10 disposed directly on protective layer 60 which is in direct contact with electrode 20.

In the examples below, an additive was introduced into the electrolyte and resulted in cycle life increases for electrochemical cells having a lithium metal anode/lithium iron phosphate cathode (Examples 1-2), in Li-S cells (Example 3) and electrochemical cells having a lithium metal anode/nickel cobalt manganese cathode (Example 4). The weight percentage of the additive was based on the weight of the electrolyte and is listed below. Additive was introduced into two types of electrolytes:
1. EC/DMC LiPF₆ (Examples 1-2)
2. DME/DOL+LiTFSI+LiNO₃ (Example 3)

The cells were cycled at a normal rate (C/5 discharge and C/8 charge) and at accelerated test conditions: 1C rate discharge and C/3 rate charge.

### EXAMPLE 1

Electrochemical cells were assembled with a lithium iron phosphate cathode received from Enertech (Korea), a vacuum deposited Li anode with thickness of 8.8 um and a Celgard 2325 separator. The cathode total active area was 99.441 cm². Cells were filled with 0.5 ml of three electrolytes:
Electrolyte 1-1: Ethylene Carbonate, 44.1 wt%; Dimethyl Carbonate, 44.1 wt%; LiPF₆, 11.8 wt%. (Comparative Electrolyte)
Electrolyte 1-2: 98.5 wt% of Electrolyte 1-1 and 1.5 wt% of Potassium Ethyl Xanthate (additive)
Electrolyte 1-3: 98 wt% of Electrolyte 1-1 and 2 wt% of Lithium Diethyl Dithiocarbamate (additive)

The weight percentages of the additives were based on the total weight of the electrolyte and additive.

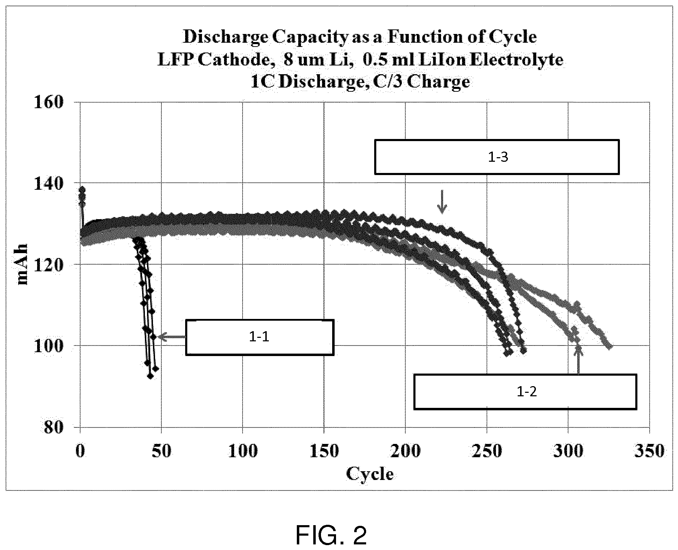

Each cell was sealed in the pouch made of Showa Denko packaging material. Cell electrical testing was performed while applying 10 kg/cm² of anisotropic pressure perpendicular to the electrodes surface. Cells at first cycle were charged at a current of 17 mA to a voltage of 4.2 V and discharged at a current 27 mA to a voltage of 2.5 V. All cells delivered a first cycle discharge capacity of 135 -137 mAh. At subsequent cycles the charge current was increased to 45 mA and the discharge current was increased to 137 mA. The cell cycle life was evaluated to the point when discharge capacity dropped below 100 mAh and is shown in FIG. 2. Specifically, cycle life delivered by three electrolytes is listed below:
Electrolyte 1-1: 46 cycles (Comparative Electrolyte)
Electrolyte 1-2: 323 cycles
Electrolyte 1-3: 272 cycles

This example shows that the addition of an additive comprising a xanthate or dithiocarbamate to the electrolyte of an electrochemical cell can significantly increase the cycle life of the electrochemical cell.

### EXAMPLE 2

Cells were assembled with a Nickel Cobalt Manganese (NCM) cathode received from Enertech (Korea), a vacuum deposited Li anode with thickness of 11 um and a Celgard 2325 separator. The cathode total active area was 99.441 cm². The cells were filled with 0.55 ml of four electrolytes:
Electrolyte 2-1: Ethylene Carbonate 44.1 wt%, Dimethyl Carbonate 44.1 wt%, LiPF₆ 11.8 w %.(Comparative Electrolyte)
Electrolyte 2-2: 98 wt% of Electrolyte 2-1 and 2 wt% of Potassium Ethyl Xanthate (additive)
Electrolyte 2-3: 98 wt% of Electrolyte 2-1 and 2 wt% of Potassium Isopropyl Xanthate (additive)
Electrolyte 2-4: 98 wt% of Electrolyte 2-1 and 2 wt% of Lithium Diethyl Dithiocarbamate (additive)

The weight percentage of the additive was based on the total weight of the electrolyte and additive.

Each cell was sealed in the pouch made of Showa Denko packaging material. Cell electrical testing was performed while applying 10 kg/cm² of anisotropic pressure perpendicular to the surface of the electrodes. Cells at the first cycle were charged at a current of 20 mA to a voltage of 4.35 V and discharged at a current of 34 mA to a voltage of 3.2 V. All cells delivered first cycle discharge capacity of 187 - 190 mAh. At subsequent cycles, the charge current was increased to 57 mA and the discharge current was increased to 170 mA. The cell cycle life was evaluated to the point when discharge capacity dropped below 150 mAh.

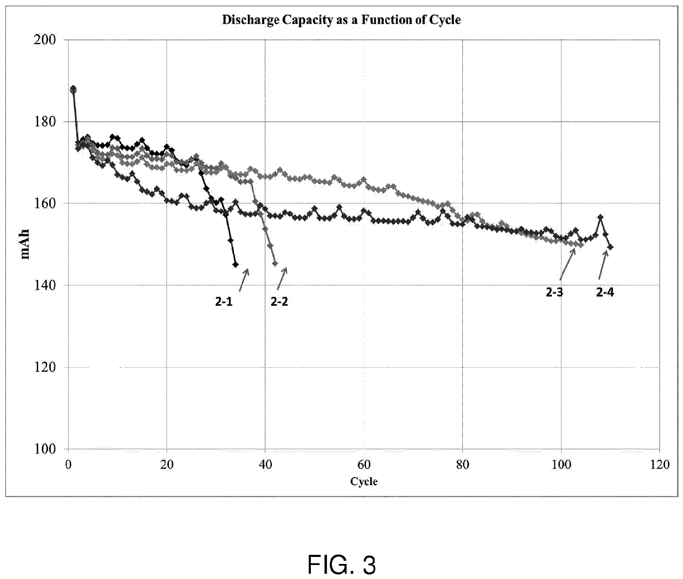

Cycle life delivered by four electrolytes is listed below and shown in FIG. 3:
Electrolyte 2-1: 33 cycles (Comparative Electrolyte)
Electrolyte 2-2: 41 cycle
Electrolyte 2-3: 104 cycles
Electrolyte 2-4: 110 cycles

This example shows that the addition of an additive comprising a xanthate or dithiocarbamate to the electrolyte of an electrochemical cell can increase the cycle life of the electrochemical cell.

### EXAMPLE 3

Cells were assembled with a sulfur cathode coated at Sion Power, a Li foil anode with a thickness of 50 um and a Tonen separator with thickness of 9 um. The cathode formulation included Sulfur-75 wt%, Carbon black 24 wt%, PVOH binder 1 wt%. The sulfur coated loading was 1.87 mg/cm². Cathode total active area was 1289 cm². Different cells were filled with 7 g of one of three electrolytes:
Electrolyte 3-1: 1,3-Dioxolane 43.3 wt%, 1,2-Dimethoxyethane 43.3 wt%, LiTFSI 8 w %, LiNO₃ 4 wt%, Guanidine Nitrate 1 wt%, Pyridine Nitrate 0.4 wt%. (Comparative Electrolyte)
Electrolyte 3-2: 98 wt% of Electrolyte 3-1 and 2 wt% of Potassium Ethyl Xanthate.
Electrolyte 3-3: 98 wt% of Electrolyte 3-1 and 2 wt% of Potassium Isopropyl Xanthate.

Each cell was sealed in the pouch made of Showa Denko packaging material. Cells were discharged at current 0.5 A to voltage 1.7 V and charged at current 0.315 A to voltage of 2.5 V. All cells delivered fifth cycle discharge capacity of 2.85 - 2.87 Ah. Cell cycle life was evaluated to the point when discharge capacity dropped below 1.75 Ah.

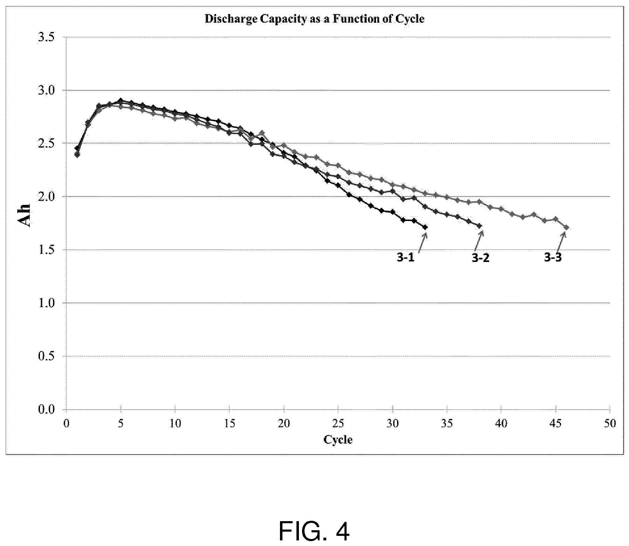

Cycle life delivered by three electrolytes is listed below and shown in FIG. 4:
Electrolyte 3-1: 33 cycles (Comparative Electrolyte)
Electrolyte 3-2: 40 cycles
Electrolyte 3-3: 46 cycles

This example shows the life cycle improvement of electrochemical cells including additives described herein for lithium cells having a sulfur cathode.

### EXAMPLE 4

This example illustrates the life cycle improvement of additives combined with LiNO₃.

Cells were assembled with a Nickel Cobalt Manganese (NCM) cathode received from Enertech (Korea), a vacuum deposited Li anode with thickness of 8 um and a Celgard 2325 separator. The cathode total active area was 99.441 cm². Four kinds of cells were assembled:
Cell 1: NCM cathode, 8 um Li anode and 0.55 ml of Electrolyte 4-1 (Ethylene Carbonate 44.1 wt%, Dimethyl Carbonate 44.1 wt%, LiPF₆ 11.8 wt%).
Cell 2: NCM cathode, 8 um Li anode and 0.55 ml of Electrolyte 4-2 (98 wt% of Electrolyte 4-1 and 2 wt% of Potassium Ethyl Xanthate).
Cell 3: NCM cathode treated with solution of LiNO₃ in methanol and then dried at 130 °C. Amount of LiNO₃ in the dry cathode was 0.1 mg/cm². Cathode was combined with 8 micron thickness Li anode and 0.55 ml of Electrolyte 4-1.
Cell 4: Cathode with LiNO₃ from 3 was combined with 8 um Li anode and 0.55 ml of Electrolyte 4-2 (98 wt% of Electrolyte 4-1 and 2 wt% of Potassium Ethyl Xanthate).

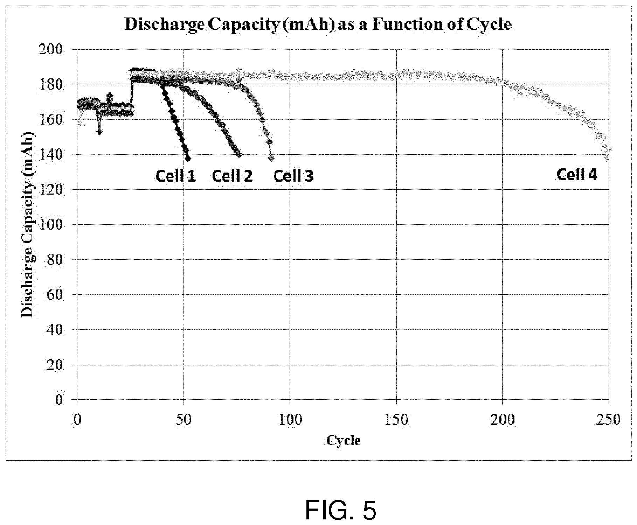

Each cell was sealed in the pouch made of Showa Denko packaging material. Cells electrical testing was performed while applying 10 kg/cm² of anisotropic pressure perpendicular to the surface of the electrodes. Cells at the first 25 cycles were charged at a current of 20 mA to a voltage of 4.20 V and discharged at a current of 34 mA to a voltage of 3.2 V. After 25 cycles charge voltage was increased to 4.35 V. All cells delivered discharge capacity of 183 - 188 mAh. The cell cycle life was evaluated to the point when discharge capacity dropped below 140 mAh. Cycle life for each cell is listed below and shown in FIG. 5:
Cell 1: 52 cycles
Cell 2: 77 cycles
Cell 3: 91 cycle
Cell 4: 250 cycles

This example shows the life cycle improvement of electrochemical cells including additives described herein for lithium cells having a nickel cobalt manganese cathode. All definitions, as defined and used herein, should be understood to control over dictionary definitions, definitions in cited documents, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of." "Consisting essentially of," when used in the claims, shall have its ordinary meaning as used in the field of patent law.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

It should also be understood that, unless clearly indicated to the contrary, in any methods claimed herein that include more than one step or act, the order of the steps or acts of the method is not necessarily limited to the order in which the steps or acts of the method are recited.

## Claims

1. An electrochemical cell, comprising:
a first electrode comprising a first active electrode species; wherein the first active electrode species comprises lithium; a second electrode comprising a second active electrode species;
an electrolyte positioned between the first electrode and the second electrode;
an additive having a structure as in Formula (I) and/or an additive precursor having a structure as in Formula (II): 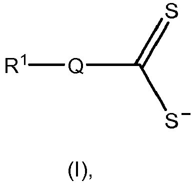 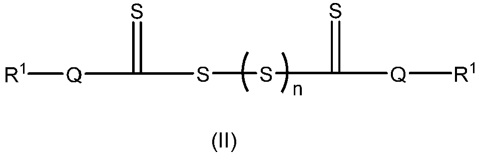 wherein:
each R¹ and R² are the same or different, optionally connected, and are independently selected from the group consisting of substituted and unsubstituted, branched and unbranched aliphatic; substituted and unsubstituted cyclic; substituted and unsubstituted, branched and unbranched acyclic; substituted or unsubstituted, branched and unbranched heteroaliphatic; substituted and unsubstituted, branched and unbranched acyl; substituted and unsubstituted aryl; and substituted and unsubstituted heteroaryl; and n is 1; and
(a) each Q is independently selected from the group consisting of O, S;
or
(b) each Q is independently selected from the group consisting of O, S, NR²; and
the additive and any additive precursor is present in the electrochemical cell in a total amount of less than or equal to 4 wt% versus the total electrolyte weight, or the additive and any additive precursor is present in the electrochemical cell in a total amount of less than or equal to 2 wt% versus the weight of each of the first and second electrodes; or
(c) each Q is selected from the group consisting of O, S, NR²; and
the additive and any additive precursor is/are different from the first and second active electrode species
wherein the additive and/or additive precursor is present in the electrolyte.

2. An electrochemical cell as in any preceding claim, wherein the additive comprises a cation, wherein the cation is preferably selected from the group consisting of Li⁺, Na⁺, K⁺, Cs⁺, Rb⁺, Ca²⁺, Mg²⁺, substituted and unsubstituted ammonium, guanidinium and imidazolium.

3. An electrochemical cell as in any preceding claim,
wherein each R¹ is C₂H₅,
and/or
wherein each R² is C₂H₅,
and/or
wherein at least one Q is oxygen or wherein at least one Q is sulfur.

4. An electrochemical cell as in claim 1,
wherein
the additive and any additive precursor is present in the electrolyte in a total amount ranging between 0.5 wt% and 20 wt% versus the total weight of the electrolyte and additive and/or additive precursor,
and/or
the additive and any additive precursor is present in the electrolyte in a total amount ranging between 0.5 wt% and 10 wt% versus the weight of each of the first and second electrodes.

5. An electrochemical cell as in claim 1,
wherein the electrolyte comprises one or more of a carbonate, a hexafluorophosphate, 1,3-dioxolane, 1,2-dimethoxyethane, a sulfonimide, sulfones, sulfolanes, esters of carbonic acid, and a nitrate containing compound,
or
wherein the electrolyte comprises a nitrate, wherein the nitrate is preferably selected from the group consisting of LiNO₃, guanidine nitrate, and pyridine nitrate.

6. An electrochemical cell as in claim 1, wherein the second active electrode species comprises sulfur.

7. A method, comprising:
introducing into an electrochemical cell or a component of an electrochemical cell an additive having a structure as in Formula (I) and/or an additive precursor having a structure as in Formula (II): 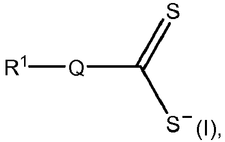 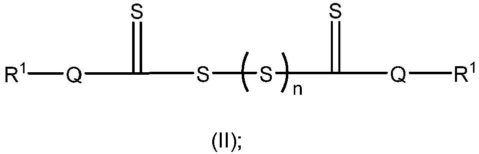 wherein:
each occurrence of Q is independently selected from the group consisting of O, S, NR²;
n is 1; and
each R¹ and R² are the same or different, optionally connected, and are independently selected from the group consisting of substituted and unsubstituted, branched and unbranched aliphatic; substituted and unsubstituted cyclic; substituted and unsubstituted, branched and unbranched acyclic; substituted and unsubstituted, branched and unbranched heteroaliphatic; substituted and unsubstituted, branched and unbranched acyl; substituted and unsubstituted aryl; and substituted and unsubstituted heteroaryl,
wherein, when Q is NR² said additive and/ or said additive precursor is introduced into an electrochemical cell comprising an electrode comprising active electrode species that is/are different from the additive and any additive precursor,
wherein the electrochemical cell comprises a first electrode comprising a first active electrode species and a second electrode comprising a second active electrode species, wherein the first active electrode species comprises lithium;
wherein introducing comprises adding to an electrolyte the additive having a structure as in Formula (I) and/or the additive precursor having a structure as in Formula (II).

8. A method as in claim 7, wherein the additive and/or additive precursor is at least partially soluble in the electrolyte,
wherein the electrolyte preferably comprises
- one or more of a carbonate, a hexafluorophosphate, 1,3-dioxolane, 1,2-dimethoxyethane, a sulfonimide, sulfones, sulfolanes, esters of carbonic acid, and a nitrate containing compound,
or
- a nitrate, wherein the nitrate is preferably selected from the group consisting of LiNO₃, guanidine nitrate, and pyridine nitrate.

9. A method as in claim 7, wherein the first and second active electrode species are different from the additive and the additive precursor, wherein preferably the second active electrode species comprises sulfur.

10. A method as in any of claims 7-9, wherein the additive comprises a cation, wherein the cation is preferably selected from the group consisting of Li⁺, Na⁺, K⁺, Cs⁺, Rb⁺, Ca²⁺, Mg²⁺, substituted and unsubstituted ammonium, guanidinium and imidazolium.

11. A method as in any of claims 7-10,
wherein each R¹ is C₂H₅,
and /or
wherein each R² is C₂H₅,
and /or
wherein at least one Q is oxygen or wherein at least one Q is sulfur.

12. A method as in any of claims 7-11, wherein at least a portion of the additive and/or additive precursor is in solid form.

13. Use of an additive for controlling the cycle life of an electrochemical cell comprising:
a first electrode comprising a first active electrode species; wherein the first active electrode species comprises lithium;
a second electrode comprising a second active electrode species;
an electrolyte positioned between the first electrode and the second electrode;
said additive having a structure as in Formula (I) and/or an additive precursor having a structure as in Formula (II): 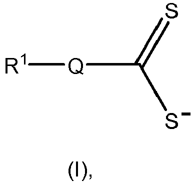 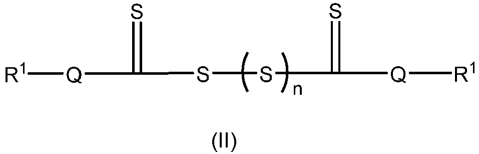 wherein:
each R¹ and R² are the same or different, optionally connected, and are independently selected from the group consisting of substituted and unsubstituted, branched and unbranched aliphatic; substituted and unsubstituted cyclic; substituted and unsubstituted, branched and unbranched acyclic; substituted or unsubstituted, branched and unbranched heteroaliphatic; substituted and unsubstituted, branched and unbranched acyl; substituted and unsubstituted aryl; and substituted and unsubstituted heteroaryl; n is 1; and
(a) each Q is independently selected from the group consisting of O, S;
or
(b) each Q is independently selected from the group consisting of O, S, NR²; and
the additive and any additive precursor is present in the electrochemical cell in a total amount of less than or equal to 4 wt% versus the total electrolyte weight, or the additive and any additive precursor is present in the electrochemical cell in a total amount of less than or equal to 2 wt% versus the weight of each of the first and second electrodes; or
(c) each Q is selected from the group consisting of O, S, NR²; and
the additive and any additive precursor is/are different from the first and second active electrode species
wherein the additive and/or additive precursor is present in the electrolyte.

## Patentansprüche

1. Elektrochemische Zelle, umfassend:
eine erste Elektrode, die eine erste aktive Elektrodenspezies umfasst; wobei die erste aktive Elektrodenspezies Lithium umfasst; eine zweite Elektrode, die eine zweite Elektrodenspezies umfasst;
einen Elektrolyt, der zwischen der ersten Elektrode und der zweiten Elektrode angeordnet ist;
ein Additiv mit einer Struktur wie in Formel (I) und/oder einen Additiv-Vorläufer mit einer Struktur wie in Formel (II): 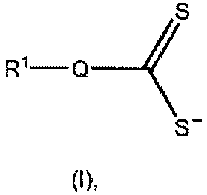 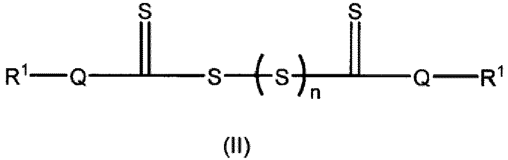 wobei:
R¹ und R² jeweils gleich oder verschieden sind, gegebenenfalls verknüpft sind und unabhängig aus der Gruppe bestehend aus substituierten und unsubstituierten, verzweigten und unverzweigten aliphatischen Gruppen; substituierten und unsubstituierten cyclischen Gruppen; substituierten und unsubstituierten, verzweigten und unverzweigten acyclischen Gruppen; substituierten und unsubstituierten, verzweigten und unverzweigten heteroaliphatischen Gruppen; substituierten und unsubstituierten, verzweigten und unverzweigten Acylgruppen; substituierten und unsubstituierten Arylgruppen und substituierten und unsubstituierten Heteroarylgruppen ausgewählt sind und n für 1 steht; und
(a) Q jeweils unabhängig aus der Gruppe bestehend aus O und S ausgewählt ist
oder
(b) Q jeweils unabhängig aus der Gruppe bestehend aus O, S und NR² ausgewählt ist; und
das Additiv und jeglicher Additiv-Vorläufer in der elektrochemischen Zelle in einer Gesamtmenge kleiner oder gleich 4 Gew.-%,
bezogen auf das Gesamtgewicht des Elektrolyts, vorliegen oder das Additiv und jeglicher Additiv-Vorläufer in der elektrochemischen Zelle in einer Gesamtmenge kleiner oder gleich 2 Gew.-%, bezogen auf das Gewicht der ersten Elektrode oder der zweiten Elektrode, vorliegen; oder
(c) Q jeweils unabhängig aus der Gruppe bestehend aus O, S und NR² ausgewählt ist; und
das Additiv und jeglicher Additiv-Vorläufer von der ersten aktiven Elektrodenspezies und der zweiten aktiven Elektrodenspezies verschieden sind,
wobei das Additiv und/oder der Additiv-Vorläufer in dem Elektrolyt vorliegen.

2. Elektrochemische Zelle nach einem der vorhergehenden Ansprüche, wobei das Additiv an Kation umfasst, wobei das Kation vorzugsweise aus der Gruppe bestehend aus Li⁺, Na⁺, K⁺, Cs⁺, Rb⁺, Ca²⁺, Mg²⁺, substituiertem und unsubstituiertem Ammonium, Guanidinium und Imidazolium ausgewählt ist.

3. Elektrochemische Zelle nach einem der vorhergehenden Ansprüche,
wobei R¹ jeweils für C₂H₅ steht
und/oder
wobei R² jeweils für C₂H₅ steht
und/oder
wobei mindestens ein Q für Sauerstoff steht oder
wobei mindestens ein Q für Schwefel steht.

4. Elektrochemische Zelle nach Anspruch 1,
wobei
das Additiv und jeglicher Additiv-Vorläufer in dem Elektrolyt in einer Gesamtmenge im Bereich zwischen 0,5 Gew.-% und 20 Gew.-%, bezogen auf das Gesamtgewicht des Elektrolyts und Additivs und/oder Additiv-Vorläufers, vorliegen,
und/oder
das Additiv und jeglicher Additiv-Vorläufer in dem Elektrolyt in einer Gesamtmenge im Bereich zwischen 0,5 Gew.-% und 10 Gew.-%, bezogen auf das Gewicht jeder der ersten und zweiten Elektrode, vorliegen.

5. Elektrochemische Zelle nach Anspruch 1,
wobei der Elektrolyt ein Carbonat, ein Hexafluorophosphat, 1,3-Dioxolan, 1,2-Dimethoxyethan, ein Sulfonimid, Sulfone, Sulfolane, Kohlensäureester und/oder eine nitrathaltige Verbindung umfasst oder
wobei der Elektrolyt ein Nitrat umfasst, wobei das Nitrat vorzugsweise aus der Gruppe bestehend aus LiNO₃, Guanidinnitrat und Pyridinnitrat ausgewählt ist.

6. Elektrochemische Zelle nach Anspruch 1, wobei die zweite aktive Elektrodenspezies Schwefel umfasst.

7. Verfahren, umfassend:
Eintragen eines Additivs mit einer Struktur wie in Formel (I) und/oder eines Additiv-Vorläufers mit einer Struktur wie in Formel (II): 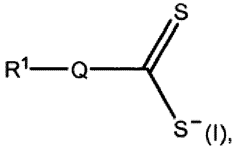 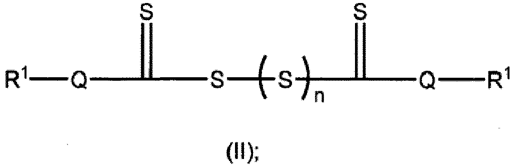 in eine elektrochemische Zelle oder eine Komponente einer elektrochemischen Zelle, wobei:
Q bei jedem Auftreten unabhängig aus der Gruppe bestehend aus O, S und NR² ausgewählt ist;
n für 1 steht und
R¹ und R² jeweils gleich oder verschieden sind, gegebenenfalls verknüpft sind und unabhängig aus der Gruppe bestehend aus substituierten und unsubstituierten, verzweigten und unverzweigten aliphatischen Gruppen; substituierten und unsubstituierten cyclischen Gruppen; substituierten und unsubstituierten, verzweigten und unverzweigten acyclischen Gruppen; substituierten und unsubstituierten, verzweigten und unverzweigten heteroaliphatischen Gruppen; substituierten und unsubstituierten, verzweigten und unverzweigten Acylgruppen; substituierten und unsubstituierten Arylgruppen und substituierten und unsubstituierten Heteroarylgruppen ausgewählt sind,
wobei dann, wenn Q für NR² steht, das Additiv und/oder der Additiv-Vorläufer in eine elektrochemische Zelle, die eine Elektrode umfasst, die aktive Elektrodenspezies umfasst, die von dem Additiv und jeglichem Additiv-Vorläufer verschieden sind, eingetragen wird,
wobei die elektrochemische Zelle eine erste Elektrode, die eine erste aktive Elektrodenspezies umfasst, und eine zweite Elektrode, die eine zweite Elektrodenspezies umfasst, umfasst, wobei die erste aktive Elektrodenspezies Lithium umfasst;
wobei das Eintragen das Zugeben des Additivs mit einer Struktur wie in Formel (I) und/oder des Additivs-Vorläufers mit einer Struktur wie in Formel (II) zu einem Elektrolyt umfasst.

8. Verfahren nach Anspruch 7, wobei das Additiv und/oder der Additiv-Vorläufer mindestens teilweise in dem Elektrolyt löslich ist,
wobei der Elektrolyt vorzugsweise
- ein Carbonat, ein Hexafluorophosphat, 1,3-Dioxolan, 1,2-Dimethoxyethan, ein Sulfonimid, Sulfone, Sulfolane, Kohlensäureester und/oder eine nitrathaltige Verbindung
oder
- ein Nitrat, wobei das Nitrat vorzugsweise aus der Gruppe bestehend aus LiNO₃, Guanidinnitrat und Pyridinnitrat ausgewählt ist,
umfasst.

9. Verfahren nach Anspruch 7, wobei die erste aktive Elektrodenspezies und die zweite aktive Elektrodenspezies von dem Additiv und dem Additiv-Vorläufer verschieden sind, wobei vorzugsweise die zweite aktive Elektrodenspezies Schwefel umfasst.

10. Verfahren nach einem der Ansprüche 7-9, wobei das Additiv ein Kation umfasst, wobei das Kation vorzugsweise aus der Gruppe bestehend aus Li⁺, Na+, K+, Cs+, Rb⁺, Ca²⁺, Mg²⁺, substituiertem und unsubstituiertem Ammonium, Guanidinium und Imidazolium ausgewählt ist.

11. Verfahren nach einem der Ansprüche 7-10,
wobei R¹ jeweils für C₂H₅ steht
und/oder
wobei R² jeweils für C₂H₅ steht
und/oder
wobei mindestens ein Q für Sauerstoff steht oder wobei mindestens ein Q für Schwefel steht.

12. Verfahren nach einem der Ansprüche 7-11, wobei mindestens ein Teil des Additivs und/oder Additiv-Vorläufers in fester Form vorliegt.

13. Verwendung eines Additivs zur Steuerung der Zykluslebensdauer einer elektrochemischen Zelle, umfassend:
eine erste Elektrode, die eine erste aktive Elektrodenspezies umfasst; wobei die erste aktive Elektrodenspezies Lithium umfasst;
eine zweite Elektrode, die eine zweite Elektrodenspezies umfasst;
einen Elektrolyt, der zwischen der ersten Elektrode und der zweiten Elektrode angeordnet ist;
wobei das Additiv eine Struktur wie in Formel (I) und/oder einen Additiv-Vorläufer mit einer Struktur wie in Formel (II): 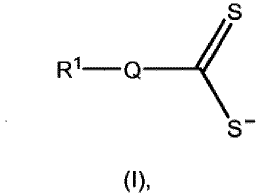 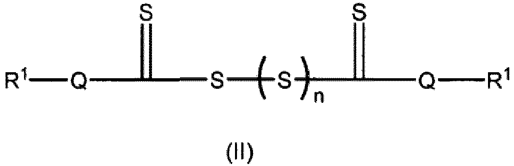 aufweist, wobei:
R¹ und R² jeweils gleich oder verschieden sind, gegebenenfalls verknüpft sind und unabhängig aus der Gruppe bestehend aus substituierten und unsubstituierten, verzweigten und unverzweigten aliphatischen Gruppen; substituierten und unsubstituierten cyclischen Gruppen; substituierten und unsubstituierte, verzweigten und unverzweigten acyclischen Gruppen; substituierten und unsubstituierten, verzweigten und unverzweigten heteroaliphatischen Gruppen; substituierten und unsubstituierten, verzweigten und unverzweigten Acylgruppen; substituierten und unsubstituierten Arylgruppen und substituierten und unsubstituierten Heteroarylgruppen ausgewählt sind und n für 1 steht; und
(a) Q jeweils unabhängig aus der Gruppe bestehend aus O und S ausgewählt ist
oder
(b) Q jeweils unabhängig aus der Gruppe bestehend aus O, S und NR² ausgewählt ist; und
das Additiv und jeglicher Additiv-Vorläufer in der elektrochemischen Zelle in einer Gesamtmenge kleiner oder gleich 4 Gew.-%, bezogen auf das Gesamtgewicht des Elektrolyts, vorliegen oder das Additiv und jeglicher Additiv-Vorläufer in der elektrochemischen Zelle in einer Gesamtmenge kleiner oder gleich 2 Gew.-%, bezogen auf das Gewicht der ersten Elektrode oder der zweiten Elektrode, vorliegen; oder
(c) Q jeweils unabhängig aus der Gruppe bestehend aus O, S und NR² ausgewählt ist; und
das Additiv und jeglicher Additiv-Vorläufer von der ersten aktiven Elektrodenspezies und der zweiten aktiven Elektrodenspezies verschieden sind,
wobei das Additiv und/oder der Additiv-Vorläufer in dem Elektrolyt vorliegen.

## Revendications

1. Cellule électrochimique, comprenant :
une première électrode comprenant une première espèce active d'électrode ; la première espèce active d'électrode comprenant du lithium ; une seconde électrode comprenant une seconde espèce active d'électrode ;
un électrolyte disposé entre la première électrode et la seconde électrode ;
un additif ayant une structure selon la formule (I) et/ou un précurseur d'additif ayant une structure selon la formule (II) : 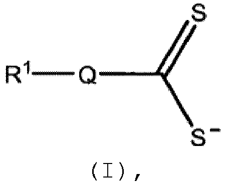 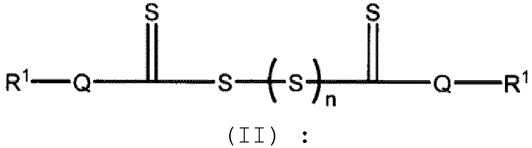 les R¹ et les R² étant pour chacun identiques ou différents, éventuellement reliés, et étant indépendamment choisis dans le groupe constitué par les groupes aliphatiques ramifiés et non ramifiés, substitués et non substitués ; les groupes cycliques substitués et non substitués ; les groupes acycliques ramifiés et non ramifiés, substitués et non substitués ; les groupes hétéroaliphatiques ramifiés et non ramifiés, substitués ou non substitués ; les groupes acyle ramifiés et non ramifiés, substitués et non substitués ; les groupes aryle substitués et non substitués ; et les groupes hétéroaryle substitués et non substitués ; et n valant 1 ; et
(a) chaque Q étant indépendamment choisi dans le groupe constitué par O, S ; ou
(b) chaque Q étant indépendamment choisi dans le groupe constitué par O, S, NR² ; et
l'additif et un quelconque précurseur d'additif étant présents dans la cellule électrochimique en une quantité totale inférieure ou égale à 4 % en poids par rapport au poids total de l'électrolyte ou l'additif et un quelconque précurseur d'additif étant présents dans la cellule électrochimique en une quantité totale inférieure ou égale à 2 % en poids par rapport au poids de chacune des première et seconde électrodes ; ou
(c) chaque Q étant choisi dans le groupe constitué par O, S, NR² ; et
l'additif et un quelconque précurseur d'additif étant différents des première et seconde espèces actives d'électrode,
dans laquelle l'additif et/ou le précurseur d'additif sont présents dans l'électrolyte.

2. Cellule électrochimique selon une quelconque revendication précédente, dans laquelle l'additif comprend un cation, le cation étant de préférence choisi dans le groupe constitué par Li⁺, Na⁺, K⁺, Cs⁺, Rb⁺, Ca²⁺, Mg²⁺, les cations ammonium substitués et non substitués, le cation guanidinium et le cation imidazolium.

3. Cellule électrochimique selon une quelconque revendication précédente,
dans laquelle chaque R¹ est C₂H₅
et/ou
dans laquelle chaque R² est C₂H₅
et/ou
dans laquelle au moins un Q est l'atome d'oxygène ou dans laquelle au moins un Q est l'atome de soufre.

4. Cellule électrochimique selon la revendication 1, dans laquelle
l'additif et un quelconque précurseur d'additif sont présents dans l'électrolyte en une quantité totale comprise entre 0,5 % en poids et 20 % en poids par rapport au poids total de l'électrolyte et de l'additif et/ou du précurseur d'additif
et/ou
l'additif et un quelconque précurseur d'additif sont présents dans l'électrolyte en une quantité totale comprise entre 0,5 % en poids et 10 % en poids par rapport au poids de chacune des première et seconde électrodes.

5. Cellule électrochimique selon la revendication 1, dans laquelle l'électrolyte comprend un ou plusieurs composés parmi un carbonate, un hexafluorophosphate, le 1,3-dioxolane, le 1,2-diméthoxyéthane, un sulfonimide, les sulfones, les sulfolanes, les esters d'acide carbonique et un composé contenant l'ion nitrate
ou
dans laquelle l'électrolyte comprend un nitrate, le nitrate étant de préférence choisi dans le groupe constitué par LiNO₃, le nitrate de guanidine et le nitrate de pyridine.

6. Cellule électrochimique selon la revendication 1, dans laquelle la seconde espèce active d'électrode comprend du soufre.

7. Procédé, comprenant :
l'introduction dans une cellule électrochimique ou un composant d'une cellule électrochimique d'un additif ayant une structure selon la formule (I) et/ou d'un précurseur d'additif ayant une structure selon la formule (II) : 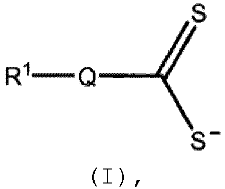 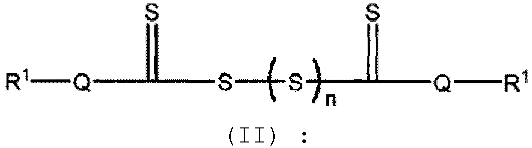
chaque occurrence de Q étant indépendamment choisie dans le groupe constitué par O, S, NR² ;
n valant 1 ; et
les R¹ et les R² étant pour chacun identiques ou différents, éventuellement reliés, et étant indépendamment choisis dans le groupe constitué par les groupes aliphatiques ramifiés et non ramifiés, substitués et non substitués ; les groupes cycliques substitués et non substitués ; les groupes acycliques ramifiés et non ramifiés, substitués et non substitués ; les groupes hétéroaliphatiques ramifiés et non ramifiés, substitués et non substitués ; les groupes acyle ramifiés et non ramifiés, substitués et non substitués ; les groupes aryle substitués et non substitués ; et les groupes hétéroaryle substitués et non substitués,
dans lequel, lorsque Q est NR², ledit additif et/ou ledit précurseur d'additif sont introduits dans une cellule électrochimique comprenant une électrode comprenant une espèce active d'électrode qui est différente de l'additif et d'un quelconque précurseur d'additif,
dans lequel la cellule électrochimique comprend une première électrode comprenant une première espèce active d'électrode et une seconde électrode comprenant une seconde espèce active d'électrode, la première espèce active d'électrode comprenant du lithium ;
dans lequel l'introduction comprend l'ajout à un électrolyte de l'additif ayant une structure selon la formule (I) et/ou du précurseur d'additif ayant une structure selon la formule (II).

8. Procédé selon la revendication 7, dans lequel l'additif et/ou le précurseur d'additif sont au moins partiellement solubles dans l'électrolyte,
dans lequel l'électrolyte comprend de préférence
- un ou plusieurs composés parmi un carbonate, un hexafluorophosphate, le 1,3-dioxolane, le 1,2-diméthoxyéthane, un sulfonimide, les sulfones, les sulfolanes, les esters d'acide carbonique et un composé contenant l'ion nitrate
ou
- un nitrate, le nitrate étant de préférence choisi dans le groupe constitué par LiNO₃, le nitrate de guanidine et le nitrate de pyridine.

9. Procédé selon la revendication 7, dans lequel les première et seconde espèces actives d'électrode sont différentes de l'additif et du précurseur d'additif, de préférence dans lequel la seconde espèce active d'électrode comprend du soufre.

10. Procédé selon l'une quelconque des revendications 7-9, dans lequel l'additif comprend un cation, le cation étant de préférence choisi dans le groupe constitué par Li⁺, Na⁺, K⁺, Cs⁺, Rb⁺, Ca²⁺, Mg²⁺, les cations ammonium substitués et non substitués, le cation guanidinium et le cation imidazolium.

11. Procédé selon l'une quelconque des revendications 7-10,
dans lequel chaque R¹ est C₂H₅
et/ou
dans lequel chaque R² est C₂H₅
et/ou
dans lequel au moins un Q est l'atome d'oxygène ou dans lequel au moins un Q est l'atome de soufre.

12. Procédé selon l'une quelconque des revendications 7-11, dans lequel au moins une partie de l'additif et/ou du précurseur d'additif est sous forme solide.

13. Utilisation d'un additif pour le réglage de la durée de vie en cyclage d'une cellule électrochimique comprenant :
une première électrode comprenant une première espèce active d'électrode ; la première espèce active d'électrode comprenant du lithium ;
une seconde électrode comprenant une seconde espèce active d'électrode ;
un électrolyte disposé entre la première électrode et la seconde électrode ;
ledit additif ayant une structure selon la formule (I) et/ou un précurseur d'additif ayant une structure selon la formule (II) : 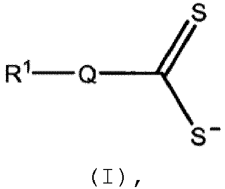 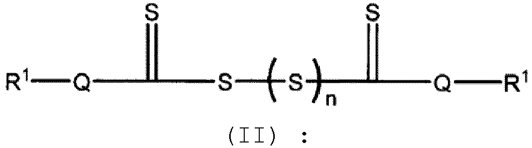 les R¹ et les R² étant pour chacun identiques ou différents, éventuellement reliés, et étant indépendamment choisis dans le groupe constitué par les groupes aliphatiques ramifiés et non ramifiés, substitués et non substitués ; les groupes cycliques substitués et non substitués ; les groupes acycliques ramifiés et non ramifiés, substitués et non substitués ; les groupes hétéroaliphatiques ramifiés et non ramifiés, substitués ou non substitués ; les groupes acyle ramifiés et non ramifiés, substitués et non substitués ; les groupes aryle substitués et non substitués ; et les groupes hétéroaryle substitués et non substitués ; n valant 1 ; et
(a) chaque Q étant indépendamment choisi dans le groupe constitué par O, S ; ou
(b) chaque Q étant indépendamment choisi dans le groupe constitué par O, S, NR² ; et
l'additif et un quelconque précurseur d'additif étant présents dans la cellule électrochimique en une quantité totale inférieure ou égale à 4 % en poids par rapport au poids total de l'électrolyte ou l'additif et un quelconque précurseur d'additif étant présents dans la cellule électrochimique en une quantité totale inférieure ou égale à 2 % en poids par rapport au poids de chacune des première et seconde électrodes ; ou
(c) chaque Q étant choisi dans le groupe constitué par O, S, NR² ; et
l'additif et un quelconque précurseur d'additif étant différents des première et seconde espèces actives d'électrode,
l'additif et/ou le précurseur d'additif étant présents dans l'électrolyte.
